# EUROPEAN PATENT APPLICATION

(11) **EP 1 189 331 A1**
(43) Date of publication of application: **20.03.2002**
(21) Application number: 00905361.2
(22) Date of filing: 25.02.2000
(51) Int. Cl.: H02K 11/00, H02K 7/06, H02K 5/04, G05D 3/12

(54) **CYLINDER SERVOMOTOR**

(71) Applicant: MITSUBISHI DENKI KABUSHIKI KAISHA, Tokyo 100-8310 (JP)
(72) Inventor: ITO, Hidenobu Mitsubishi Denki Kabushiki Kaisha, Tokyo 100-8310 (JP); TAKAMUNE, Kouichi Mitsubishi Denki Kabushiki Kai., Tokyo 100-8310 (JP); MIZUTANI, Takao Mitsubishi Denki Kabushiki Kaisha, Tokyo 100-8310 (JP)
(74) Representative: HOFFMANN - EITLE
(86) International application number: JP0001117
(87) International publication number: WO0163730

(57) **Abstract**

A cylinder servo motor includes a servo motor having a rotor and a stator; a cylinder servo motor main unit which is connected to a rotary shaft of the rotor of the servo motor by way of a ball screw nut and which has a ball screw shaft, the ball screw shaft moving in an axial direction; a rotation detector for detecting a rotary position of the servo motor; control means for controlling the rotation detector and the servo motor; and storage means which is provided in the control means and stores a travel distance correction value to be used for correcting the accuracy of splitting of a travel distance of the ball screw shaft at the time of control of the servo motor, wherein the cylinder servo motor main unit, the rotation detector, and the control means are integrated. As a result, there is provided a cylinder servo motor which enables high-precision positioning and easy handling.

## Description

### Technical Field

The present invention relates to a cylinder servo motor having integrated therein a controller, a detector, a servo motor, a ball screw nut, and a ball screw shaft.

### Background Art

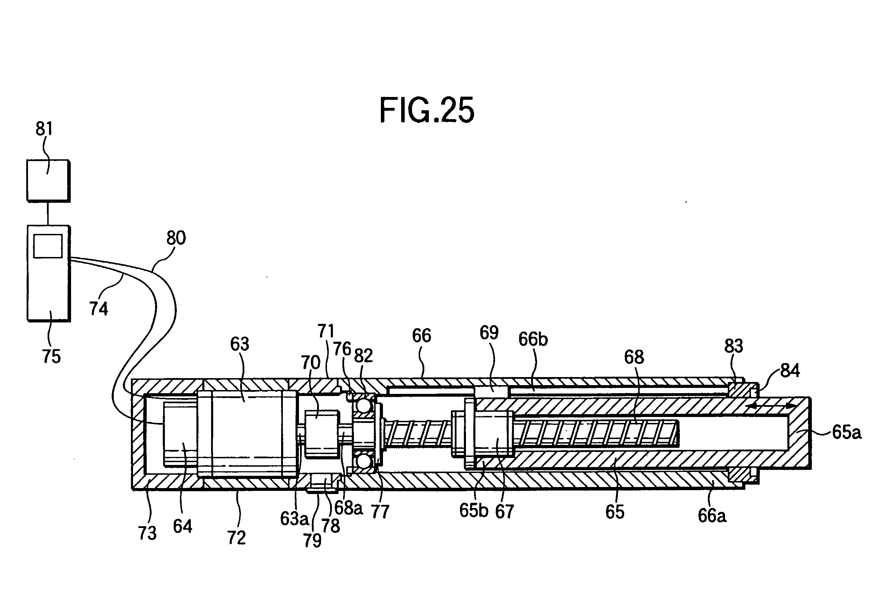

Fig. 25 shows a related-art cylinder servo motor. As shown in the drawing, reference numeral 63 designates a motor serving as a drive source; 64 designates a rotational speed detector for detecting the rotational speed of the motor 63; 68 designates a ball screw shaft; 67 designates a ball screw nut screw-engaged with the ball screw shaft 68; and 65 designates a hollow cylinder rod. A load is connected to a load-side end 65a of the cylindrical rod 65, and an opposite end 65b of the cylinder rod 65 is fastened to the ball screw nut 67. A rotary shaft bearing 82 is fitted around an end 68a of the ball screw shaft 68. A motor shaft 63a and the end 68a of the ball screw shaft 68 are coupled together by means of a flexible coupling 70. Reference numeral 77 designates an inner ring fastening nut. The inner ring fastening nut 77, along with an outer ring fastening nut 76 screw-engaged with an inner peripheral wall of a cylinder case 66, fixes the rotary shaft bearing 82. The cylinder rod 65 is supported by a sleeve shaft bearing 83 which is fastened to a load-side end 66a of the cylinder case 66 and has an oil seal 84. A slide block 69 is fastened to the cylinder rod 65 and is clearance-fitted to a keyway 66b formed in the cylinder case 66. Reference numeral 71 designates a case, which secures the cylinder case 66 and a motor case 72, which houses and supports the motor 63. Reference numeral 78 designates a hole formed in the case 71; and 79 designates a blank cap. Reference numeral 73 designates a cover of the rotational speed detector 64; and 74 designates a cable of the rotational speed detector 64. Reference numeral 80 designates a power line of the motor 63; 75 designates an amplifier serving as a controller; and 81 designates a higher-level controller.

In the related-art cylinder servo motor having the foregoing construction, power is fed to the motor 63 by way of the amplifier 75 in accordance with an instruction output from the higher-level controller 81, thereby rotating the motor shaft 63 and the ball screw shaft 68. Rotation of the cylinder rod 65 fastened to the ball screw nut 67 is stopped. Hence, the cylinder rod 65 does not rotate in conjunction with rotation of the ball screw shaft 68 and rotates directly along with the ball screw nut 67, thus acting as a cylinder servo motor.

The ball screw shaft 68 employed in the related-art cylinder servo motor has a lead error attributable to machining accuracy attained during production. The lead error differs from one ball screw shaft to another. Because of the lead error, the location to which the cylinder rod 65 is to travel differs from the location instructed by the higher-level controller 81. In short, the positioning accuracy becomes deteriorated. Particularly, when a higher level of positioning accuracy is required, a very expensive, high-precision ball screw is required. For this reason, after having mounted a cylinder servo motor on a machine, a machinery manufacturer or an end user measures a distance over which the cylinder rod 65 has actually traveled in accordance with an instruction value output from the higher-level controller 81, through use of a high-precision position measuring instrument such as a laser displacement gauge. On the basis of data pertaining to the measurement result, correction data are prepared, and the thus-prepared data are stored in memory (not shown) provided in the higher-level controller 81. At the time of operation of the machine, the positioning accuracy of the machine is improved, through use of the correction data which correspond to the instruction value and are stored in the memory provided in the higher-level controller 81. As mentioned above, the machine manufacturer or an end user must possess a high-precision position measuring instrument and perform measurement by themselves. A high-precision adjustment technique is required, and the time required for assembling and adjusting a machine becomes longer.

When a cylinder servo motor is replaced with a new one, the contents stored in the memory of the higher-level controller 81 differ from those required for the new cylinder servo motor. Hence, measurement must be performed once again. A great deal of time is required for repairing failures or changing facilities.

The related-art cylinder servo requires the cable 74 for connecting the rotational speed detector 64 and the amplifier 75, and the power line 80 for connecting the motor 63 with the amplifier 75. The cable 74 and the power line 80 are wired by a machinery manufacturer or an end user. Hence, there sometimes arise problems, such as an operation failure or a failure of the rotational speed detector 64 attributable to incorrect wiring.

The motor shaft 63a of the motor 63 and the end 68a of the ball screw shaft 68 are coupled together by means of the flexible coupling 70. The coupling 70 requires the case 71, and a space in the axis of ball screw shaft 68 must be ensured, thereby increasing the overall length of the cylinder servo motor.

Since the ball screw shaft 68 is inserted into the cylinder rod 65, only a ball screw shaft which is much smaller in diameter than the cylinder rod 65 can be used as the ball screw shaft 68. Hence, if an attempt is made to increase allowable thrust, the cylinder servo motor becomes bulky.

Since the cylinder rod 65 is supported by the sleeve shaft bearing 83, wear arises in the slide section as a result of sliding friction. Particularly, at the time of high-speed operation, the life span of the cylinder servo motor becomes shorter.

Further, the rotation of the cylinder rod 65 is stopped by means of the slide block 69 clearance-fitted to the keyway 66b. Hence, a contact surface of the cylinder rod 65 is abraded by means of sliding friction, thereby resulting in an increase in backlash.

Contact between the slide block 69 and the keyway 66b arises in the form of sliding friction. Hence, at the time of operation, excessive thrust corresponding to a friction loss in the contact surface is required, thus deteriorating efficiency.

Further, at the time of assembly of a cylinder servo motor, the motor shaft 63a and the end 68a of the ball screw shaft 68 are coupled together by the flexible coupling 70. A set screw (not shown) must be fastened to the flexible coupling 70, by use of a hexagonal wrench and by way of a hole 78. To this end, the cylinder rod 65 must be moved along the axis of the ball screw shaft 68, thereby finding a hole for the set screw. This results in an increase in the number of assembly steps, thereby adding to costs.

The present invention has been conceived to solve the drawback set forth and is aimed at providing a cylinder servo motor capable of eliminating a necessity of a machinery manufacturer or an end user performing a measurement or wiring operation for realizing a high-precision cylinder servo motor.

The present invention provides a compact cylinder servo motor which can produce large thrust and a long linear stroke.

The present invention is also aimed at providing an efficient cylinder servo motor having a long life span.

The present invention is also aimed at providing a cylinder servo motor of superior ease of assembly.

### Disclosure of the Invention

The present invention provides a cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
a rotation detector for detecting a rotary position of the servo motor;
control means for controlling the rotation detector and the servo motor; and
storage means which is provided in the control means and stores a travel distance correction value to be used for correcting the accuracy of splitting of a travel distance of the ball screw shaft at the time of control of the servo motor,
wherein the cylinder servomotormain unit, the rotation detector, and the control means are integrated.

As a result, at the time of control of the servo motor, the accuracy of splitting of a travel distance of the ball screw shaft can be corrected through use of the travel distance correction value. Thus, there can be obtained a high-precision cylinder servo motor.

A necessity of measuring correction of an accumulated lead error in a ball screw pitch of a cylinder servo motor at a location to which the cylinder servo motor is to be shipped is obviated, and by extension there is obviated a necessity of a high-precision position measurement instrument being provided at a location to which the cylinder servo motor is to be shipped. Moreover, the time required for assembling and adjusting a machine having the cylinder servo motor built therein becomes shorter. Even when the cylinder servo motor is replaced, there is obviated a necessity of again measuring correction of an accumulated lead error in ball screw pitch at a location to which the cylinder servo motor is to be shipped.

A necessity of wiring a line between the servo motor, the rotation detector, and the control device section at a location to which the cylinder servo motor is to be shipped is obviated, thereby improving workability.

According to the present invention, the storage means for storing the travel distance correction value is provided on the control means for controlling the rotation detector.

Hence, even when the servo motor main unit and the rotation detector have been replaced with new ones for reasons of mechanical life, there is no necessity of again correcting an accumulated lead error of a ball screw pitch of a cylinder servo motor at a location to which the cylinder servo motor is to be shipped.

In the cylinder servo motor according to the present invention, the storage means for storing the travel distance correction value is provided on the control means for controlling the servo motor.

Hence, there is obviated a circuit or software for correcting an accumulated lead error in the ball screw pitch of the cylinder servo motor, and there can be employed a standard device.

The present invention also provides a cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
an absolute rotation detector for detecting an absolute rotary position of the servo motor;
storagemeans for storing a per-rotation split angle error correction value of the absolute rotation detector;
first control means for controlling the absolute rotation detector;
second control means for controlling the servo motor,
wherein the cylinder servo motor main unit, the rotation detector, the first control means, and the second control means are integrated together, and a travel distance correction value for correcting the accuracy of splitting of a travel distance of the ball screw shaft at the time of control of the servo motor is stored as being combined with the per-rotation split angle error correction value of the absolute rotation detector.

Even when the servo motor main unit and the rotation detector have been replaced with new ones for reasons of mechanical life, there is no necessity of again correcting an accumulated lead error of a ball screw pitch of a cylinder servo motor at a location to which the cylinder servo motor is to be shipped. Since the absolute rotation detector is used, the position of the ball screw shaft is backed up even when power is turned off. Hence, there is no necessity of returning the ball screw shaft to its home position. Further, the signal output from the rotation detector to the control means of the servo motor takes into account a travel distance correction value to be used for correcting the accuracy of splitting of a travel distance of the ball screw shaft. Hence, the control means of the servo motor can handle the signal output from the rotation detector equally with an ordinary signal which takes into account a travel distance correction value to be used for correcting the accuracy of splitting a travel distance of the ball screw shaft. Control load exerted on the control means of the servo motor is little. Hence, a servo system realizes good trackability. The control means of the servo motor can be embodied through use of a standard device without use of a special correction circuit or amendment software. Even when the control means of the servo motor is replaced and repaired, a high degree of precision of the control device section can be sustained.

Further, the storage means for storing a per-rotation split angle error correction value of the absolute rotation detector can be used also as the storage means for storing the travel distance correction value to be used for correcting the accuracy of splitting of a travel distance of a ball screw shaft.

The present invention also provides a cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
an absolute rotation detector for detecting an absolute rotary position of the servo motor;
first control means for controlling the absolute rotation detector; and
second control means for controlling the servo motor, wherein
the cylinder servo motor main unit, the rotation detector, the first control means, and the second control means are integrated together, and the second control means is provided with storage means for storing the travel distance correction value used for correcting the accuracy of splitting a travel distance of the ball screw shaft at the control of the servo motor.

For this reason, the signal output from the rotation detector can be handled simultaneously with a travel distance correction value used for correcting the accuracy of splitting a travel distance of a ball screw shaft. Since the servo motor section can be controlled on the basis of a correct position of a magnetic pole. High-precision control of the cylinder servo motor can be efficiently effected, through use of the travel distance to be used for correcting the accuracy of splitting a travel distance of a ball screw shaft. Further, a circuit or software for correcting an accumulated lead error correction in a ball screw pitch of a cylinder servo motor is not required as control means for controlling the rotation detector. Hence, a standard device can be used as the control means.

In the cylinder servo motor according to the present invention, the rotor of the servo motor is constituted of the rotary shaft and a permanent magnet, the rotary shaft being rotatably supported by a load-side bearing supported by a load-side bracket and by a non-load-side bearing supported by a non-load-side bracket, at least the load-side end of the rotary shaft being released, a through hole being formed in the rotary shaft so as to extend in an axial direction, and the permanent magnet being disposed opposite the stator fixed to the rotary shaft with a predetermined clearance therebetween. Further, the ball screwnut is constituted of a ball circulation mechanism and is mounted on a load-side shaft end of the rotary shaft. The ball screw shaft is screw-engaged with the ball screw nut so as to become movable in only the axial direction such that a non-load-side shaft end of the ball screw shaft is housed in the through hole of the rotary shaft and such that a load-side end of the ball screw shaft protrudes from the load-side bracket. A rotation portion of the rotation sensor is coupled to a non-load-side portion of the rotary shaft protruding from the hole formed in the non-load-side bracket and is covered with a rotation sensor cover. The control means of the servo motor is disposed on a part of the non-load-side bracket distant from the stator, and the control means and the rotation sensor cover are covered with a chassis to be fastened to the non-load-side bracket.

Since there is obviated use of any coupling for coupling a rotary shaft with a ball screw shaft, which would have hitherto been employed, the cylinder servo motor becomes compact despite having a long stroke. Hence, the cylinder servo motor is made compact overall, and the number of components is reduced.

The rotation portion of the rotation sensor is doubly covered by the rotation sensor cover and the chassis. Accordingly, reliability of the cylinder servo motor against an external environment is improved.

In the servo motor according to the present invention, the non-load-side end of the rotary shaft and the through hole are elongated to a position where the control means of the servo motor is disposed. Further, in association with elongation of the non-load-side end and elongation of the through hole, the non-load-side shaft end of the ball screw shaft is elongated.

Hence, there can be provided a cylinder servo motor having a stroke of longer linear movement even when a cylinder servo motor of a given dimension is employed.

Further, in the cylinder servo motor according to the present invention, a non-load-side of the through hole of the rotary shaft is opened, and a cover for covering the open side is removably provided. Further, a through hole is formed in a portion of the chassis opposing the cover with reference to an axial direction of the rotary shaft. Moreover, the through hole formed in the chassis is provided with a removable cover.

Manual positioning of the ball screw shaft can be effected while the cylinder servo motor is mounted on a machine, thereby improving workability and operability. Since the cylinder servo motor is provided with a cover for covering the open section of the rotor shaft and a cover for covering the through hole formed in the chassis. Reliability of the rotation section of the rotation detector against an external environment is improved.

In the cylinder servo motor according to the present invention, the load-side shaft bearing is constituted of a ball bearing. An outer ring of the ball bearing is fixedly sandwiched between a shoulder section formed on an internal peripheral wall of the load-side bracket and an outer ring fastening nut to be screw-engaged with an internal peripheral wall of the load-side bracket. An inner ring of the ball bearing is fixedly sandwiched between a ball screw nut fastening shoulder section formed on the load-side shaft end of the rotary shaft of the servo motor and an inner ring fastening nut to be screw-engaged with the rotary shaft of the servo motor. An inner diameter of the inner ring of the ball bearing is made greater than an outer diameter of the rotor of the servo motor.

As a result, a cylinder servo motor can be assembled from one direction, thereby improving workability.

In the cylinder servo motor according to the present invention, the ball screw nut fastening shoulder is formed on the load-side shaft end of the rotary shaft, and a fastening flange section is formed on the ball screw nut. A portion of the ball screw nut is fitted into the through hole formed in the load-side shaft end of the rotary shaft. The fastening flange section is brought into contact with and screw-engaged with the ball screw nut fastening shoulder section. Thereby, the ball screw nut is fastened to the load-side shaft end of the rotary shaft, and an oil seal is held on the load-side bracket. A lip section of the oil seal is brought into contact with an outer peripheral surface of the ball screw nut fastening flange.

As a result, the oil seal section in an axial direction thereof can be shortened, thereby rendering the cylinder servo motor more compact.

In the cylinder servo motor according to the present invention, a ball screw nut fastening shoulder is formed on a load-side shaft end of the rotary shaft, and a fastening flange section is formed at a position closer to the center of the ball screw nut. A portion of the ball screw nut is fitted into a through hole section formed in the load-side shaft end of the rotary shaft, and the fastening flange section is brought into contact with and screw-engaged with the ball screw nut fastening shoulder section. As a result, the ball screw nut is fastened to the load-side shaft end of the rotary shaft, and an oil seal is held on the load-side bracket. A lip section of the oil seal is brought into contact with an outer peripheral surface at the shaft end of the ball screw nut.

Hence, there is improved abrasion resistance of the oil seal and elongate the life span of the cylinder servo motor, because a sliding diameter of the lip section of the oil seal becomes smaller and a circumferential speed of a contact section becomes low.

In the cylinder servo motor according to the present invention, a detent groove is formed in an outer peripheral section of the ball screw shaft, wherein the detent groove has substantially the same depth as that of a thread groove or a depth shallower than that of the thread groove and extends in an axial direction. Further, the ball screw shaft has at least two balls to be inserted into the detent groove, and a spring for pressing the balls toward the detent groove at all times. The balls are disposed such that at least one of the balls is situated in the detent groove at all times.

Hence, there is diminished abrasion of the contact surface, thereby prolonging the life span of a whirl stop and diminishing friction loss of the whirl stop (by extension, input power is diminished, thereby realizing energy savings), because the whirl stop makes rolling contact.

In the cylinder servo motor according to the present invention, a detent groove is formed in an outer peripheral section of the ball screw shaft, wherein the detent groove has substantially the same depth as that of a thread groove or a depth shallower than that of the thread groove and extends in an axial direction. Further, the ball screw shaft has at least one cylindrical roller which is to be inserted into the detent groove and is longer than a screw pitch of the ball screw shaft, and a spring for pressing the cylindrical ball toward the detent groove at all times.

Hence, the overall length of a cylinder servo motor is shortened, because one detent unit provided in the direction of the rotary shaft acts as a whirl stop.

### Brief Description of the Drawings

Fig. 1 is a fragmentary longitudinal cross-sectional view showing a cylinder servo motor according to a first embodiment of the present invention;
Fig. 2 is an enlarged cross-sectional view of a load-side shaft end section (a detent mechanism) of the cylinder servo motor according to the first embodiment;
Fig. 3 is an operation descriptive view of the detent mechanism of the cylinder servo motor according to the first embodiment;
Fig. 4 is a view when viewed from direction A shown in Fig. 3;
Fig. 5 is a schematic diagram showing an electrical circuit of the cylinder servo motor according to the first embodiment;
Fig. 6 is a schematic diagram showing an electric circuit required for writing, into memory, a ball screw pitch error correction value of the cylinder servo motor according to the first embodiment;
Fig. 7 is a flowchart for describing an operation required for writing, into memory, a ball screw pitch error correction value of the cylinder servo motor according to the first embodiment;
Fig. 8 is a flowchart for describing an operation during a normal operation of the cylinder servo motor according to the first embodiment;
Fig. 9 is a conceptual rendering showing computation of a ball screw pitch error correction value of the cylinder servo motor according to the first embodiment;
Fig. 10 is a view showing a method of assembling the cylinder servo motor according to the first embodiment;
Fig. 11 is a fragmentary longitudinal cross-sectional view showing a cylinder servo motor according to a second embodiment of the present invention;
Fig. 12 is a schematic diagram showing an electrical circuit of the cylinder servo motor according to the second embodiment;
Fig. 13 is a schematic diagram showing an electric circuit required for writing, into memory, a ball screw pitch error correction value of the cylinder servo motor according to the second embodiment;
Fig. 14 is a flowchart for describing anoperation required for writing, into memory, a ball screw pitch error correction value of the cylinder servo motor according to the second embodiment;
Fig. 15 is a flowchart for describing an operation during a normal operation of the cylinder servo motor according to the second embodiment;
Fig. 16 is a conceptual rendering showing computation of a ball screw pitch error correction value of the cylinder servo motor according to the second embodiment;
Fig. 17 is a fragmentary longitudinal cross-sectional view showing a cylinder servo motor according to a third embodiment of the present invention;
Fig. 18 is a diagram showing the geometry of a printed board used in a rotation sensor of the cylinder servo motor according to a third embodiment;
Fig. 19 is a fragmentary longitudinal cross-sectional view showing a cylinder servo motor according to a fourth embodiment of the present invention;
Fig. 20 is a fragmentary longitudinal cross-sectional view showing a cylinder servo motor according to a fifth embodiment of the present invention;
Fig. 21 is a fragmentary longitudinal cross-sectional view showing a cylinder servo motor according to a sixth embodiment of the present invention;
Fig. 22 is an operation descriptive view of the detent mechanism of the cylinder servo motor according to the sixth embodiment;
Fig. 23 is a view when viewed from direction B shown in Fig. 22;
Fig. 24 is a perspective view showing that the detent mechanism of the cylinder servo motor according to the sixth embodiment is in a contact state; and
Fig. 25 is a longitudinal cross-sectional view showing a related-art cylinder servo motor.

### Best Modes for Implementing the Invention

### First Embodiment

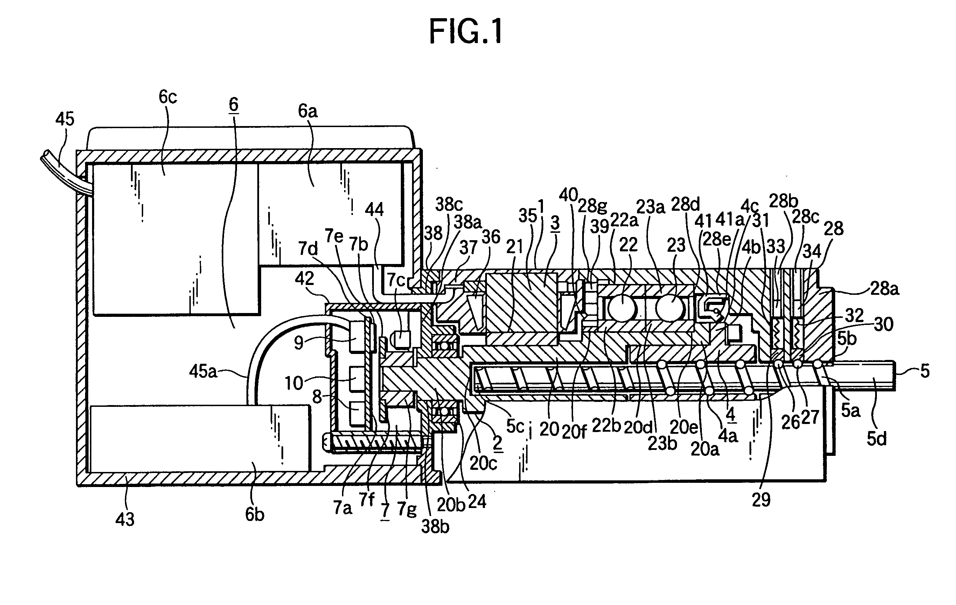

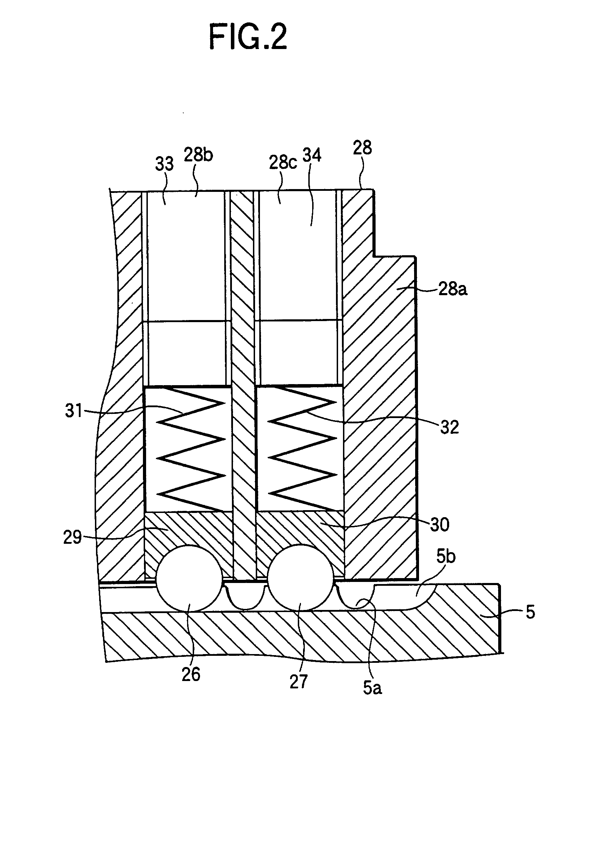

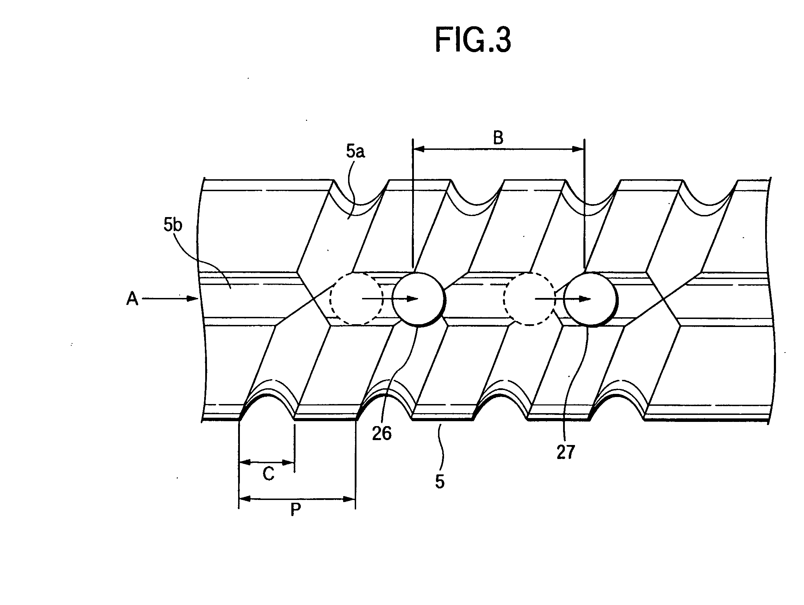

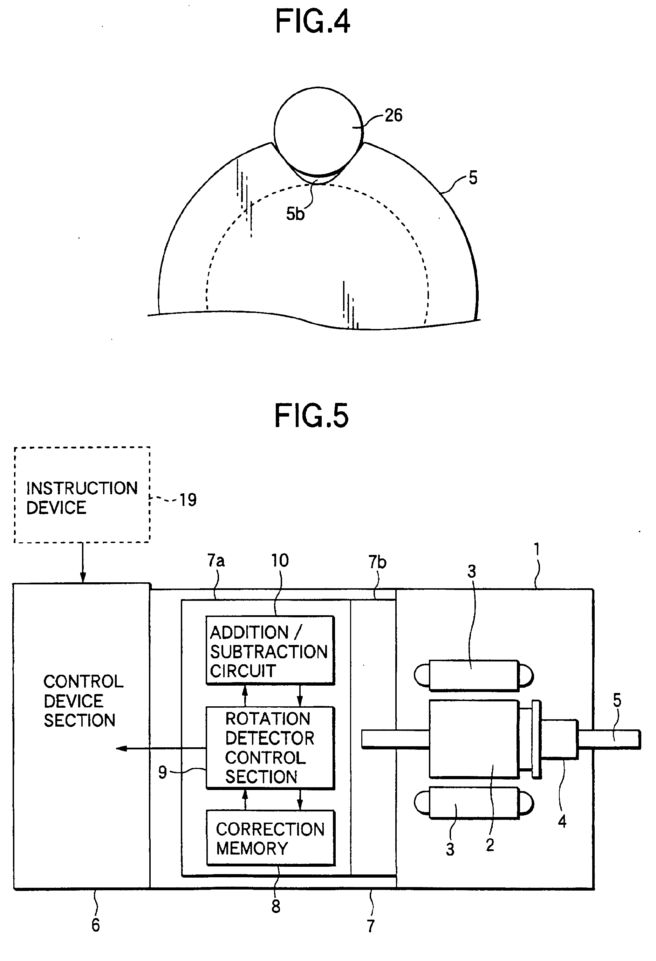

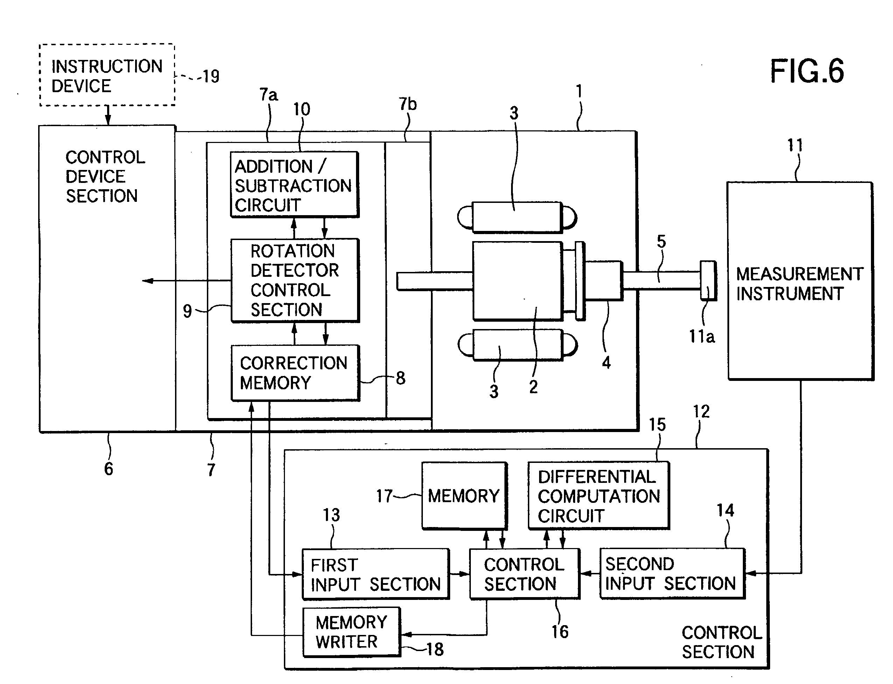

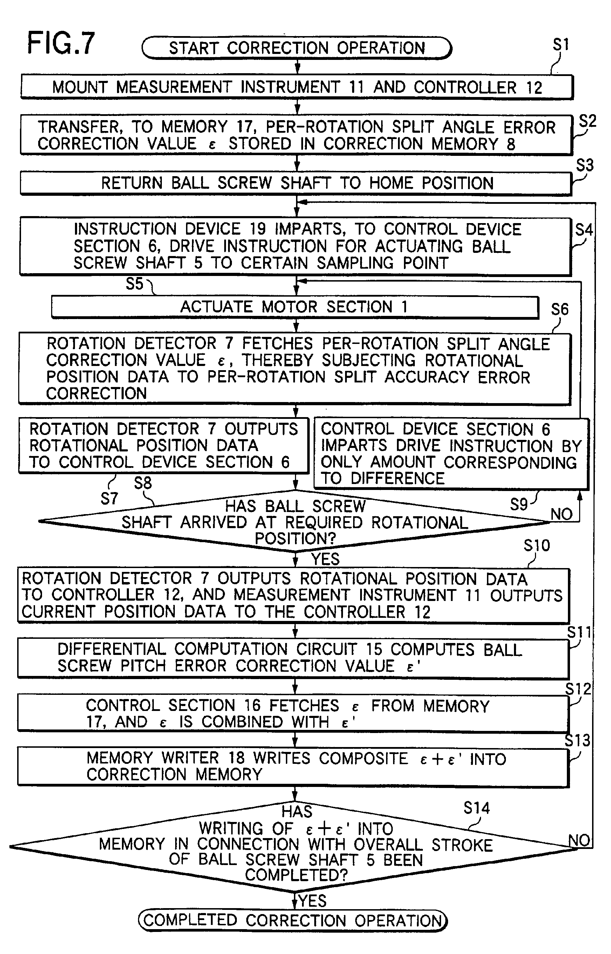

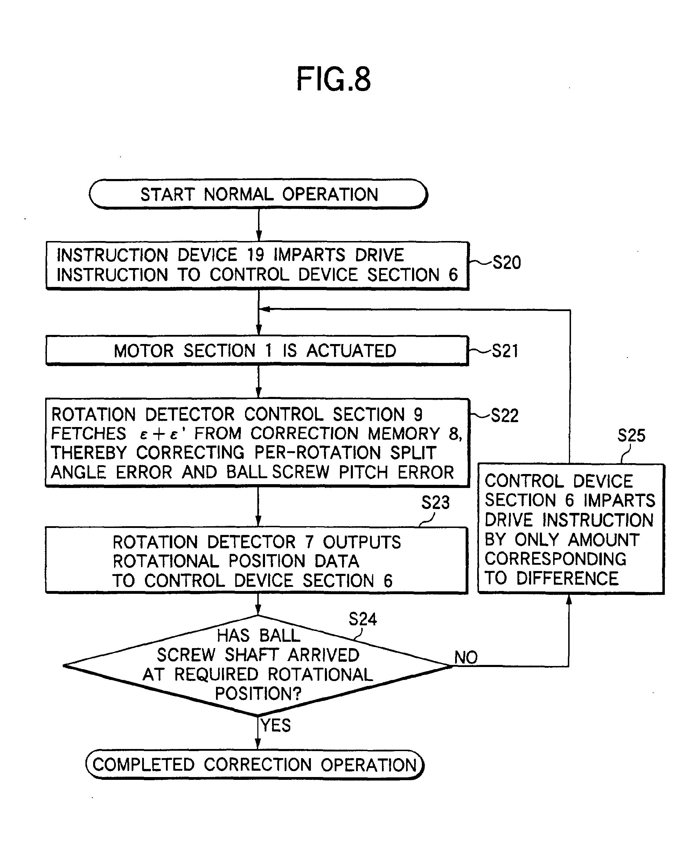

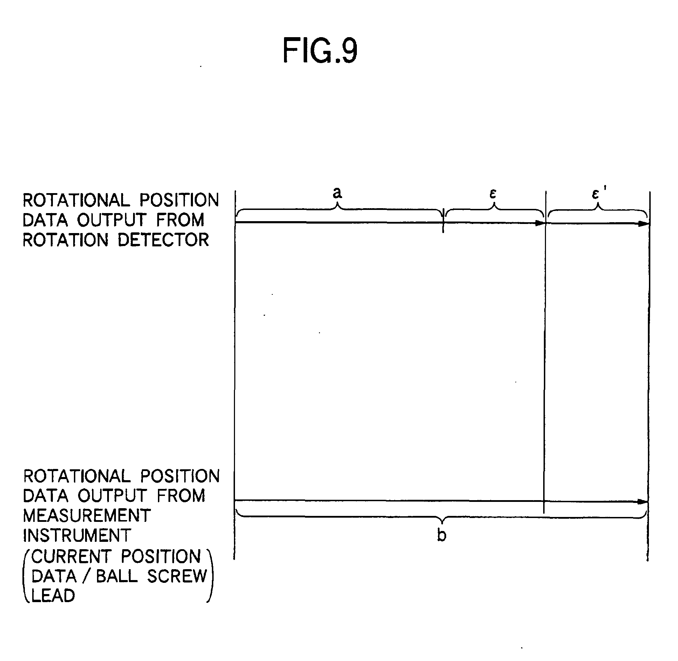

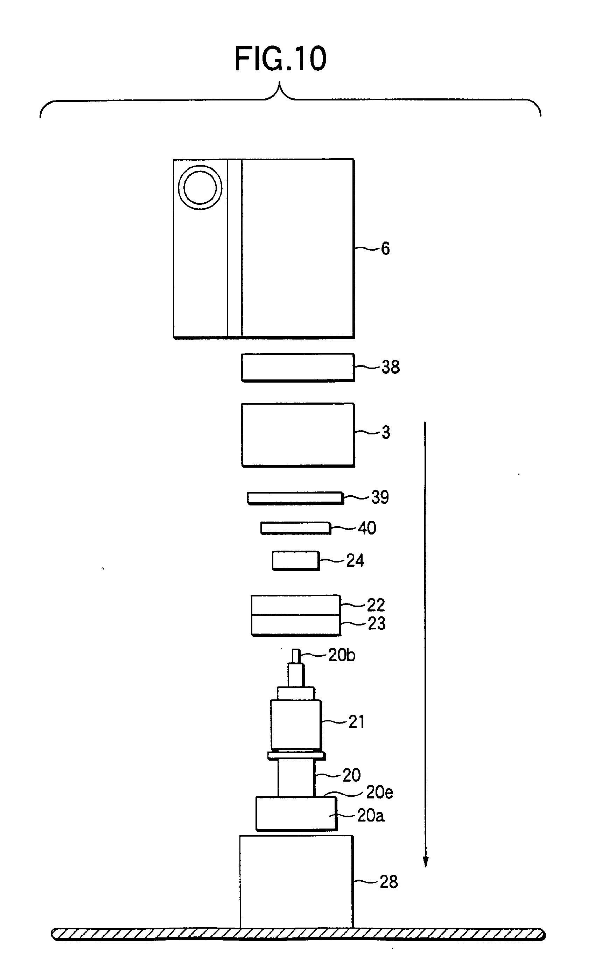

A first embodiment of the present invention will be described by reference to Figs. 1 through 10. Fig. 1 is a fragmentary longitudinal cross-sectional view of a cylinder servomotor. Fig. 2 is an enlarged cross-sectional view showing a load-side end of a shaft (a detent mechanism) ; Fig. 3 is an operation explanatory view showing the detent mechanism; Fig. 4 is a view of the detent mechanism when viewed from direction A shown in Fig. 3; Fig. 5 is a circuit diagram showing the electrical circuit of a cylinder servo motor; Fig. 6 is a circuit diagram showing an electrical circuit for writing, into memory, a value for correcting an error in a ball screw pitch of the cylinder servo motor (simply called a "ball screw pitch error correction value"); Fig. 7 is a flowchart for describing an operation for writing the ball screw pitch error correction value into memory; Fig. 8 is a flowchart for describing operation of the cylinder servo motor during normal operation; Fig. 9 is a conceptual rendering showing computation of a ball screw pitch error correction value; and Fig. 10 is a view showing a method of assembling the cylinder servo motor.

As shown in Fig. 1, reference numeral 1 designates a servo motor having a rotor 2 and a stator 3. The rotor 2 of the servo motor 1 is constituted of a rotary shaft 20 and a permanent magnet 21 fixed on the outer peripheral section of the rotary shaft 20. The rotor 2 is rotatably supported by a load-side shaft bearing 22 held by a load-side bracket 28, by a load-side shaft bearing 23 held by a non-load-side bracket 38, and by an opposite shaft bearing 24. A non-penetrating hole 20c is formed in the rotary shaft 20 so as to extend along the axis of the rotary shaft 20, from a load-side shaft end 20a to a non-load-side shaft end 20b. The non-penetrating hole 20c is formed such that an open side is greater in diameter than a closed side by only a predetermined amount so as to enable a portion of a ball screw nut 4 to be described later to fit into the open end. The larger-diameter portion of the open side of the non-penetrating hole 20c extends to the load-side ball bearing 22 in the axial direction. Since the ball screw nut 4 is to be fastened to the load-side shaft end 20a of the rotary shaft 20, a shoulder section 20e is formed for securing an inner ring 22b of the load-side ball bearing 22 and an inner ring 23b of the load-side ball bearing 23. Further, a male screw 20f with which an inner ring fastening nut 40 is to be screw-engaged is formed in substantially the center of the rotary shaft 20. The non-load-side shaft end 20b of the rotary shaft 20 fixes a sign board 7f of an absolute rotation detector 7 to be described later. Hence, the non-load shaft end 20b protrudes from a hole 38b of the non-load-side bracket 38 to the outside.

The stator 3 is constituted by means of winding a coil 36 around an iron core 35 and sealing the coil 36 and the iron core 35 with resin 37. The stator 3 is fitted and fixed to a load-side bracket 28 and the non-load-side bracket 38 and is disposed opposite the permanent magnet 21 of the rotor 2 at a nominal radial distance.

Reference numeral 4 designates a ball screw nut, and balls 4a of a ball circulation mechanism (not shown) are provided in an internal peripheral section of the ball screw nut 4. Further, a portion of the ball screw nut 4 is fitted into an internal peripheral section 20d of an open section of the rotary shaft 20. A flange section 4b is brought into contact with the shoulder 20e of the rotary shaft 20 and is secured on the load-side shaft end 20a of the rotary shaft 20 by means of a bolt 25 to be screw-engaged with the shoulder 20e of the rotary shaft 20.

Since the construction of the ball screw nut 4 is publicly known, detailed description of the ball screw nut 4 is omitted.

Reference numeral 5 designates a ball screw shaft. A helical thread groove 5a is formed in the outer periphery of the ball screw shaft 5 over substantially the entire length thereof, so as to assume a predetermined lead and pitch at which the balls 4a of the ball screw nut 4 are to fit into the thread groove 5a. The ball screw shaft 5 is supported by the ball screw nut 4 so as to be movable in the axial direction by way of the balls 4a of the ball screw nut 4, such that a load-side shaft end 5d of the ball screw shaft 5 protrudes from the load-side bracket 28 and such that a non-load-side shaft end 5c is housed in the deepest end of the non-penetrating hole 20c of the rotary shaft 20. A detent mechanism, which is shown in detail in Figs. 2 through 4, prevents rotation of the ball screw shaft 5 when the ball screw shaft 5 is moved in the axial direction.

The detent mechanism comprises a substantially V-shaped single detent groove 5b; two steel balls 26 and 27; two ball bearings 29 and 30; springs 31 and 32; and lock screws 33 and 34. The detent groove 5b is formed in the vicinity of the load-side shaft end 5d of the ball screw shaft 5 in parallel with the axial direction of the ball screw shaft 5. The detent groove 5b has a depth substantially identical with the depth of the thread groove 5a or a depth slightly shallower than the depth of the screw thread 5a. As shown in Fig. 4, the two steel balls 26 and 27 rotate and come into contact with the detent groove 5b at two points. Holes 28b and 28c are formed in the end 28a of the load-side bracket 28, and the two ball bearings 29 and 30 rotatably support the steel balls 26 and 27. The springs 31 and 32 press the two ball bearings 29 and 30 at all times. The lock screws 33 and 34 are screw-threaded into the respective holes 28b and 28c formed in the end section 28a of the load-side bracket 28, thereby adjusting a rolling contact pressure between the detent groove 5b and the two steel balls 26and27, froma fasteningposition. As shown in Fig. 3, provided that a pitch of the thread groove 5a is taken as P, an interval between the steel balls 26 and 27 is taken as B, and the width of the thread groove 5a is taken as C, the detent mechanism assumes the relationships C<1/2P and 1.5P<B<2P. More specifically, even when the ball screw shaft 5 is located at an arbitrary position, there is ensured a dimensional relationship such that at least one of the steel balls 26 and 27 is inevitably located in the detent groove 5b.

In relation to the load-side ball bearings 22 and 23 combined so as to support the rotary shaft 20, outer rings 22a and 23a are fixed in the direction of the rotary shaft, by means of a housing shoulder section 28d of the load-side bracket 28 and by means of an outer ring fastening nut 39 to be screw-engaged with a female thread 28g formed in an internal peripheral wall of the load-side bracket 28. Inner rings 22b and 23b are fastened in the direction of the rotary shaft by a shoulder 20e of the rotary shaft 20 for securing the flange 4b of the ball screw nut 4, as well as by the inner ring fastening nut 40 to be screw-engaged with the male screw 20f of the rotary shaft 20. By means of setting a clamping torque of the inner ring fastening nut 40 to a predetermined value, an axial clearance between the load-side ball bearings 22 and 23 is eliminated. Further, the inner diameter of the inner ring 22b of the load-side ball bearing 22 and the inner diameter of the inner ring 23b of the load-side ball bearing 23 are set so as to become greater than the outer diameter of the permanent magnet 21 of the rotor 2.

Reference numeral 41 designates an oil seal, and the oil seal 41 is fixedly fitted to an oil seal housing 28e of the load-side bracket 28. A lip section 41a is in contact with an outer peripheral section 4c of the flange section 4b of the ball screw nut 4.

The cylinder servo motor is constituted of the foregoing constituent components.

Reference numeral 7 designates an absolute rotation detector, and the absolute rotation detector 7 is disposed outside the non-load side bracket 38. The absolute rotation detector 7 comprises a light-emitting section 7c fastened to a non-external-side end face 38a of the non-load-side bracket 38; a sign board 7f having a predetermined pattern and a rotation section 7b having a boss 7g; a detection section 7a, the light-emitting section 7c of the absolute rotation detector 7 being fastened to the non-load bracket 38 by means of a screw; and a rotation detector cover 42 for hermetically sealing the rotation section 7b and the detection section 7a in combination with the non-load-side bracket 38. The sign board 7f is fastened to the boss 7g. The boss 7g is fixedly fitted to the non-load-side shaft end 20b of the rotary shaft 20 projecting from the hole 38b of the non-load bracket 38. Thus, the boss 7g is rotatably fastened to the non-load-side shaft end 20b of the rotary shaft 20. The detection section 7a is constituted of a light-receiving section 7e which is mounted on a printed board 7d and opposes the light-emitting section 7c by way of the sign board 7f; correction memory 8; a rotation detector control section 9; and an addition/subtraction circuit 10, wherein the memory 8, the control section 9, and the circuit 10 constitute first control means, as shown in Fig. 5.

At a point in time when the rotation detector 7 is manufactured, only a split angle correction value ε representing the correction for each rotation of the rotation detector 7 is stored in the correction memory 8. However, at a final stage (i.e., when the product is shipped) , a composite value consisting of the per-rotation split angle correction value ε of the rotation detector 7 and a ball screw pitch ε' of the ball screw shaft 5 (a travel distance correction value used for correcting the accuracy of splitting of a travel distance of the ball screw shaft) is stored in the correction memory 8.

Here, the per-rotation split angle correction value ε is for correcting a pitch error of a split window (not shown) provided in the sign board 7f or for correcting a per-rotation split angle error of the sign board 7f stemming from movement of the sign board 7f due to misalignment arising when the sign board 7f is attached to the rotary shaft 20. At a point in time when the rotation detector 7 is manufactured, a central value of per-rotation split angle error of the rotation detector 7 relative to a reference split angle is sought by means of a correction value computing unit (not shown) . The thus-sought value is taken as a correction value.

Reference numeral 6 designates a control device section which acts as second control means for controlling the position of the servo motor 1 and which is housed and held in a chassis 43 secured on the non-external end face 38a of the non-load-side bracket 38. The control device section 6 is constituted of an inverter circuit 6a, a control circuit 6b electrically connected to the inverter circuit 6a, and a power supply circuit 6c (used as a power source for the inverter circuit 6a, the control circuit 6b, and the rotation detector 7). The inverter circuit 6a is electrically connected to the coil 36 of the stator 3 by means of a lead wire 44, by way of a lead wire hole 38c of the non-load-side bracket 38. The control circuit 6b is electrically connected to the rotation detector control section 9 of the rotation detector 7 by means of a connection cable 45a and is electrically connected to the inverter circuit 6a. Further, the control circuit 6b is electrically connected to an external instruction device 19 by means of a connection cable 45.

An electric circuit and operation of the control device section 6 are identical with those of a known control device for a servo motor. Hence, their detailed explanations are omitted here.

In order to store, into the correction memory 8 before shipment of a product, a composite value consisting of the per-rotation split angle correction value ε of the rotation detector 7 and a ball screw pitch error ε' of the ball screw shaft 5, operations such as those shown in Figs. 6, 7, and 9 are performed.

More specifically, as shown in Fig. 6, at a point in time when assembly of a cylinder servo motor has finished, a reflection mirror 11a is attached to a tip end of the ball screw shaft 5. A laser measurement instrument 11 is disposed so as to be able to measure a travel distance of the ball screw shaft 5. Further, there is disposed a controller 12 electrically connected to the laser measurement instrument 11, the correction memory 8, and a connector (not shown) (step S1 shown in Fig. 7). The controller 12 is constituted of a first input section 13, a second input section 14, a differential computing circuit 15, a control section 16, memory 17, and a memory writer 18.

Power of the control device section 6 is turned on, to thereby activate the inverter circuit 6a, the control circuit 6b, and the rotation detector 7. Further, the laser measurement instrument 11 and the controller 12 are turned on and activated. Next, the per-rotation split angle correction value ε of the rotation detector 7―which is stored in the correction memory 8 at a point in time at which the rotation detector 7 is shipped―is transferred to memory 17 of the controller 12 by way of the first input section 13 and the control section 16 (step S2 shown in Fig. 7).

Then, a home position signal is input to the control device section 6 from an instruction device 19. When the home position signal is input to the control device section 6, the inverter circuit 6a converts input AC power into three-phase AC power of a desired frequency, a desired voltage, and a desired current. The three-phase AC power is fed to the coil 36 of the stator 3 by way of the lead wire 44, thereby inducing a rotating magnetic field. As a result, the rotor 2 is rotated, thereby returning the servo motor 1 to its home position (step S3 shown in Fig. 7).

At this time, in association with rotation of the rotor 2, the ball screw nut 4 fastened to the load-side shaft end 20a is also rotated, thereby imparting thrust to the ball screw shaft 5 by way of the balls 4a. The ball screw shaft 5 attempts to rotate the ball screw nut 4 by means of static friction. However, the steel balls 26 and 27 are pressed against the detent groove 5b by means of the springs 31 and 32. Further, the interval B between the steel balls 26 and 27 and the dimension of the thread groove 5a assume a relationship such as that shown in Fig. 3. At least one of the steel balls 26 and 27 remains in the detent groove 5b, and hence the ball screw shaft 5 rotates directly without involving rotation of the ball screw nut 4.

The instruction device 19 imparts to the control device section 6 an instruction signal for actuating the ball screw shaft 5 to a certain sampling point (step S4 shown in Fig. 7). Upon receipt of the instruction signal, the control device section 6 actuates the servo motor 1 in the same manner as mentioned above (step S5 shown in Fig. 7). When the servo motor 1 is driven, the boss 7g and the sign board 7f, which are fixedly fitted to the non-load-side shaft end 20b, also rotate. By means of an optical signal output from the light-emitting section 7c, the light-receiving section 7e reads a pattern of the sign board 7f. The result of reading is converted into a photocurrent. The photocurrent is converted into a photo-voltage by means of an analog circuit (not shown) provided on the printed board 7d, and the photo-voltage is converted into rotational position data by means of a digital circuit (not shown) provided on the printed board 7d. At this time, the rotation detector control section 9 extracts the per-rotation split angle correction value ε of the rotation detector 7 previously stored in the correction memory 8. The rotational position data are subjected to per-rotation split angle error correction in conjunction with the addition/subtraction circuit 9, through use of the correction value ε (step S6 shown in Fig. 7).

The rotational position data are output to the control device section 6 (step S7 shown in Fig. 7). The control circuit 6b of the control device 6 compares the rotational position data with the instruction signal, thus determining whether or not the ball screw shaft 5 has arrived at a predetermined rotational position (step S8 shown in Fig. 7). If the ball screw shaft 5 has not yet achieved the predetermined rotational position, power is fed to the coil 36 in order to actuate the ball screw shaft 5, such that a difference becomes zero (step S9 shown in Fig. 7) . More specifically, a general servo control operation is performed.

When the predetermined rotational position has been achieved, the rotation detector control section 9 outputs to the control section 16 the rotational position data that have been corrected by means of the per-rotation split angle correction value ε of the rotation detector 7, by way of the first input section 13 of the controller 12. The current position data pertaining to the ball screw shaft 5 that are obtained by means of the measuring instrument 11 measuring the light reflected from the reflection mirror 11a are output to the control section 16 by way of the second input section 14 of the controller 12 (step S10 shown in Fig. 7).

The rotational position data―which are input to the control section 16 and have been corrected by the per-rotation split angle correction value ε of the rotation detector 7―and the current position data pertaining to the ball screw shaft 5 are output to the differential computing circuit 15 of the controller 12. As shown in Fig. 9, the differential computing circuit 16 computes a ball screw pitch error correction value ε', in conjunction with the control section 16 (step S11 shown in Fig. 7). The thus-computed ball screw pitch error correction value ε' is temporarily stored in the memory 17.

As shown in Fig. 9, a+ε designates rotational position data output from the rotational detector 7. The rotational position data a+ε is the sum of rotational position data "a" representing a per-rotation absolute rotational position signal and a per-rotation split angle error correction value ε written into the correction memory 8. Further, "b" represents rotational position data obtained through conversion, by means of dividing the current positional data pertaining to the ball screw shaft 5 output from the measuring instrument 11 by the value of a lead of the ball screw. A ball screw pitch error correction value ε' is computed, by means of effecting computation of b-(a+ε).

The control section 16 fetches the per-rotation split angle correction value ε of the rotational detector 7 stored in the memory 17. The thus-fetched split angle correction value ε is combined with the previously-computed ball screw pitch error correction value ε', thereby producing a composite value ε+ε' (step S12 shown in Fig. 7). The memory writer 18 writes the composite value into the correction memory 8 as combined correction data (step S13 shown in Fig. 7).

Processing pertaining to steps S4 through S14 is repeated in connection with the overall stroke of the ball screw shaft 5 until writing of ε+ε' is completed.

As has been described above, before shipment of a cylinder servo motor, the composite value (ε+ε'), which consists of the per-rotation split angle correction value ε of the rotation detector 7 and the ball screw pitch error ε' of the ball screw shaft 5, is stored into the correction memory 8.

Before storage of the composite value (ε+ε') into the correction memory, the per-rotation split angle correction value ε of the rotation detector 7 stored in the correction memory 8 may be deleted or left as is after all the composite values (ε+ε') have been stored into the correction memory. At the time of actual operation after storage of the composite value (ε+ε'), a readout address is taken into consideration such that the composite value (ε+ε') is read from the correction memory 8 and such that the thus-read composite value is used.

After writing of the composite value (ε+ε') has been completed, the measuring instrument 11 and the controller 12 are removed from the servo motor.

As mentioned above, the cylinder servo motor according to the first embodiment is constructed in the manner mentioned above. During normal operation, the cylinder servo motor operates in the manner as described in the flowchart shown in Fig. 8.

The instruction device 19 imparts to the control device section 6 an instruction signal for actuating the ball screw shaft 5 to a certain sampling point (step S20). Upon receipt of the instruction signal, the inverter circuit 6a converts input AC power into three-phase AC power of a desired frequency, a desired voltage, and a desired current. The three-phase AC power is fed to the coil 36 of the stator 3 by way of the lead wire 44, thereby inducing a rotatingmagnetic field. As a result, the servo motor 1 is actuated (step S21). In association with rotation of the rotor 2, the ball screw nut 4 fastened to the load-side shaft end 20a is also rotated, thereby imparting thrust to the ball screw shaft 5 by way of the balls 4a. The ball screw shaft 5 attempts to rotate the ball screw nut 4 by means of static friction. However, the steel balls 26 and 27 are pressed against the detent groove 5b by means of the springs 31 and 32. Further, the interval B between the steel balls 26 and 27 and the dimension of the thread groove 5a assume a relationship such as that shown in Fig. 3. Even when the ball screw shaft 5 is situated at an arbitrary position, at least one of the steel balls 26 and 27 remains in the detent groove 5b, and hence the ball screw shaft 5 rotates directly without involving rotation of the ball screw nut 4.

When the servo motor 1 is driven, the boss 7g and the sign board 7f, which are fixedly fitted to the non-load-side shaft end 20b, also rotate. By means of an optical signal output from the light-emitting section 7c, the light-receiving section 7e reads a pattern of the sign board 7f. The result of reading is converted into a photocurrent. The photocurrent is converted into a photo-voltage by means of an analog circuit (not shown) provided on the printed board 7d, and the photo-voltage is converted into rotational position data by means of a digital circuit (not shown) provided on the printed board 7d. At this time, the rotation detector control section 9 extracts composite correction data consisting of the per-rotation split angle correction value ε of the rotation detector 7 previously stored in the correction memory 8 and the ball screw pitch error correction value ε'. Along with the addition/subtraction circuit 10, the rotation detector control section 9 computes, as rotational position data, data that have been corrected for a per-rotation split angle error of the rotation detector 7 and for an error in ball screw pitch, through use of the composite correction data (step S22).

The thus-corrected rotational position data are output to the control device section 6 (step 23). The control device 6 compares the rotational position data with the instruction signal, thus determining whether or not the ball screw shaft 5 has arrived at a predetermined rotational position (step S24). If the ball screw shaft 5 has not yet achieved the predetermined rotational position, power is fed to the coil 36 in order to actuate the ball screw shaft 5, such that a difference becomes zero (step S25). More specifically, a general servo control operation is performed.

When a difference between the rotational position data and the instruction signal has become zero, power supply to the coil 36 is disconnected, thereby actuating the ball screw shaft 5 to the instructed position.

As has been described, in the first embodiment, the accuracy of splitting of a travel distance of the ball screw shaft 5 can be corrected at the time of control of the servo motor 1, through use of composite correction data (ε+ε') consisting of the per-rotation split angle correction value ε of the rotation detector 7 and the ball screw pitch error correction value ε'. As a result, a high-precision cylinder servo motor can be provided.

A necessity of measuring correction of an accumulated lead error in a ball screw pitch of a cylinder servo motor at a location to which the cylinder servo motor is to be shipped is obviated, and by extension there is obviated a necessity of a high-precision position measurement instrument being provided at a location to which the cylinder servo motor is to be shipped. Moreover, the time required for assembling and adjusting a machine having the cylinder servo motor built therein becomes shorter. Even when the cylinder servo motor is replaced, there is obviated a necessity of again measuring correction of an accumulated lead error in ball screw pitch at a location to which the cylinder servo motor is to be shipped.

A necessity of wiring a line between the servo motor 1, the rotation detector 7, and the control device section 6 at a location to which the cylinder servo motor is to be shipped is obviated, thereby improving workability. Further, there is obviated a necessity of discussing a location where a controller is to be disposed, thereby improving the freedom of mechanical design.

Even when a servo motor main unit and the rotation detector 7 have been replaced with new ones for reasons of mechanical life, there is no necessity of again correcting an accumulated lead error of a ball screw pitch of a cylinder servo motor at a location to which the cylinder servo motor is to be shipped. Since the absolute rotation detector 7 is used, the position of the ball screw shaft is backed up even when power is turned off. Hence, there is no necessity of returning the ball screw shaft 5 to its home position. The signal output from the rotation detector 7 to the control device section 6 takes into account a ball screw pitch error correction value to be used for correcting the accuracy of splitting of a travel distance of the ball screw shaft 5. Hence, the control device section 6 can handle a signal output from the rotation detector 7 as an ordinary signal which does not taken into account a ball screw pitch correction value used for correcting the accuracy of splitting of a travel distance of the ball screw shaft 5. Control load exerted on the control device section 6 for correcting the accuracy of splitting of a travel distance of the ball screw shaft 5 is small. Hence, a servo system realizes good trackability. The control device section 6 can be embodied through use of a standard device without use of a special correction circuit or amendment software. Even when the control device section 6 of the servo motor is replaced and repaired, a high degree of precision of the control device section 6 can be sustained.

Storage means for storing a ball screw pitch error correction value to be used for correcting the accuracy of splitting of a travel distance of the ball screw shaft 5 can double as the correction memory 8 for storing a per-rotation split angle error correction value of an absolute rotation detector.

Since the cylinder servo motor does not use any coupling for coupling the rotary shaft 20 with the ball screw shaft 5, which would have hitherto been employed, the cylinder servo motor becomes compact despite having a large stroke. Hence, the cylinder servo motor is wholly made compact, and the number of components is reduced.

The electric circuit of the rotation detector 7 is doubly covered by the rotation detector cover 42 and the chassis 43. Further, a hole is formed in the rotary shaft 20, and the hole is the non-penetrating hole 20c. Thus, good airtightness is ensured, and reliability of the cylinder servo motor against an external environment is improved.

As schematically shown in Fig. 10, the previously-described components can be assembled from one direction, thereby improving the ease of assembly of a cylinder servo motor.

More specifically, in relation to the load-side bracket 28 having a detent mechanism and the oil seal 41 incorporated therein beforehand, there can be sequentially assembled the rotor 2 having the ball screw nut 4 and the ball screw shaft 5 incorporated therein beforehand, the load-side ball bearings 22 and 23, the non-load-side ball bearing 24, the inner ring fastening nut 40, the outer ring fastening nut 39, the stator 3, the non-load-side bracket 38, the absolute rotation detector 7, and the control device section 6.

The lip section 41a of the oil seal 41 is in contact with the outer peripheral surface 4c of the fastening flange 4b of the ball screw nut 4. Hence, the dimension of the oil seal section can be shortened in the axial direction, thereby rendering the cylinder servo motor more compact.

Since the detent mechanism makes rolling contact, abrasion of a contact surface is diminished, thereby prolonging the life span of the detection mechanism and reducing friction loss (by extension, input power is diminished, and energy savings is attained).

### Second Embodiment

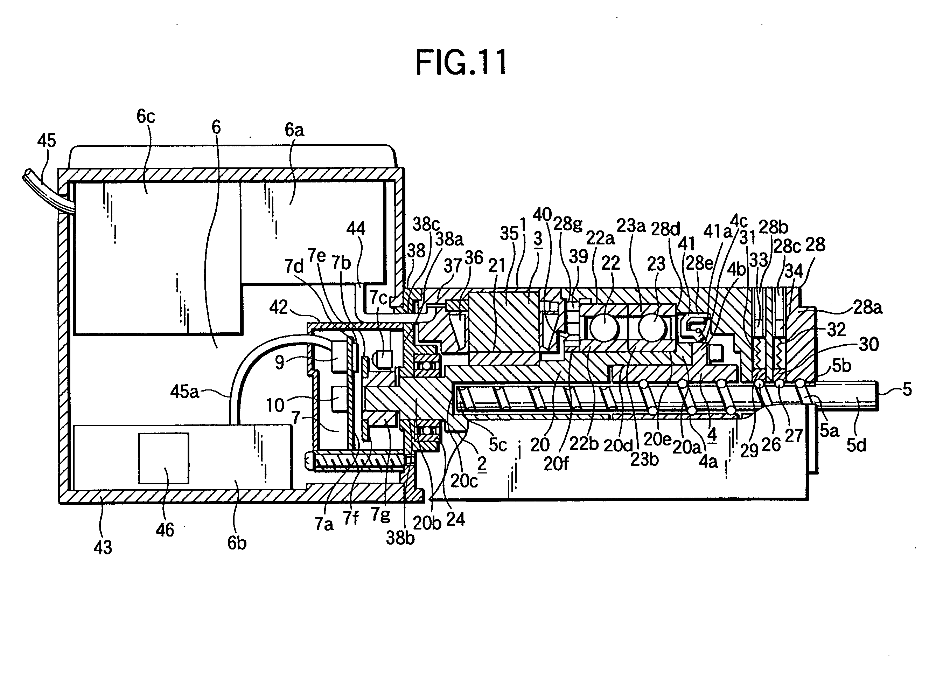

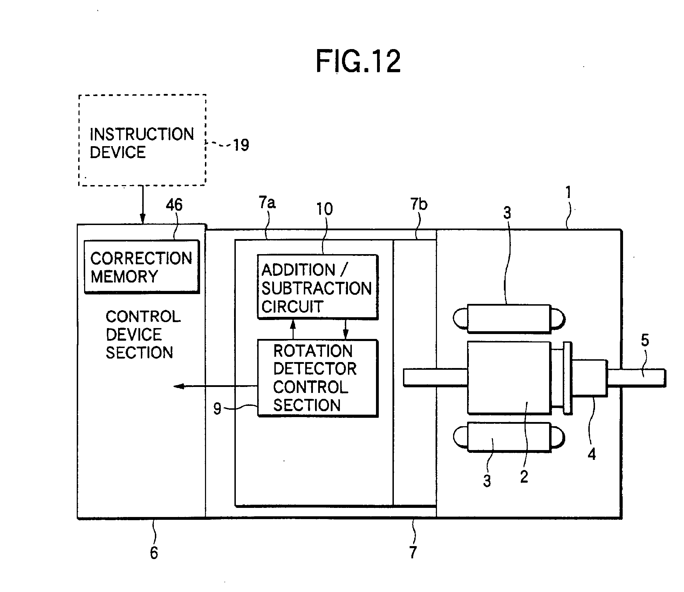

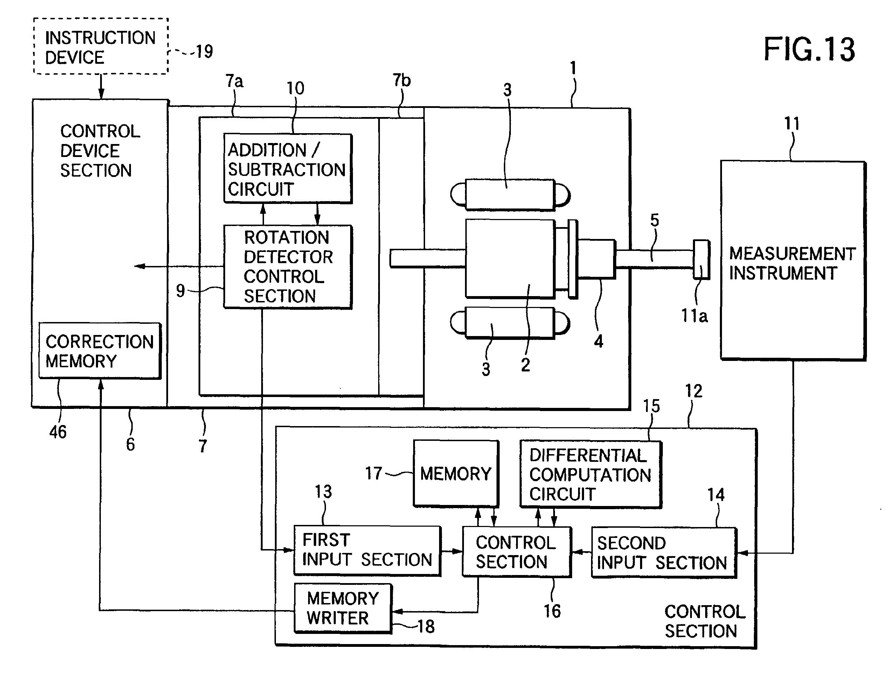

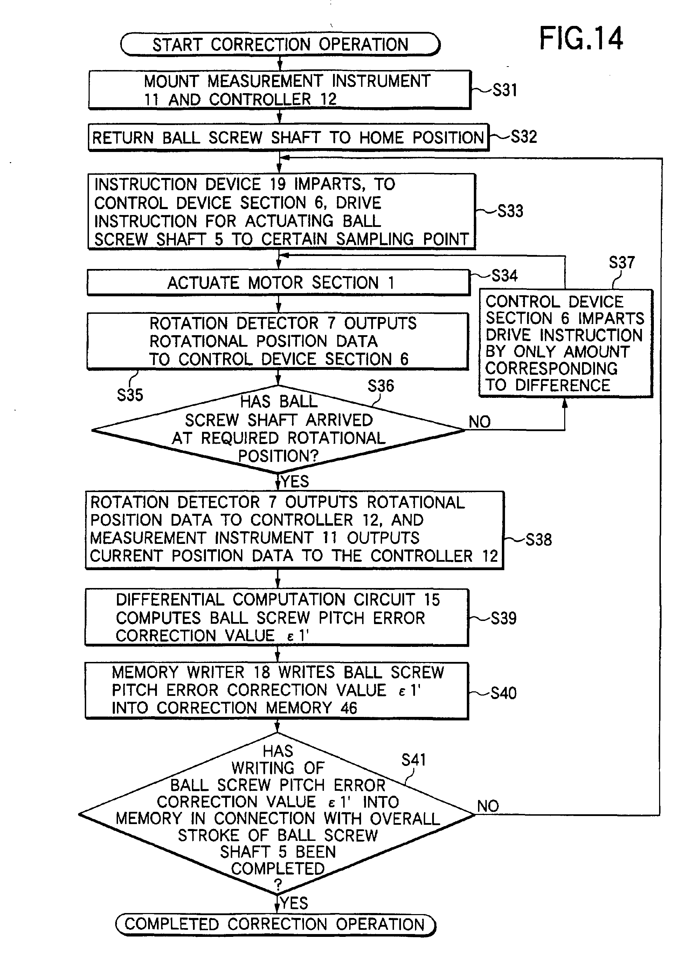

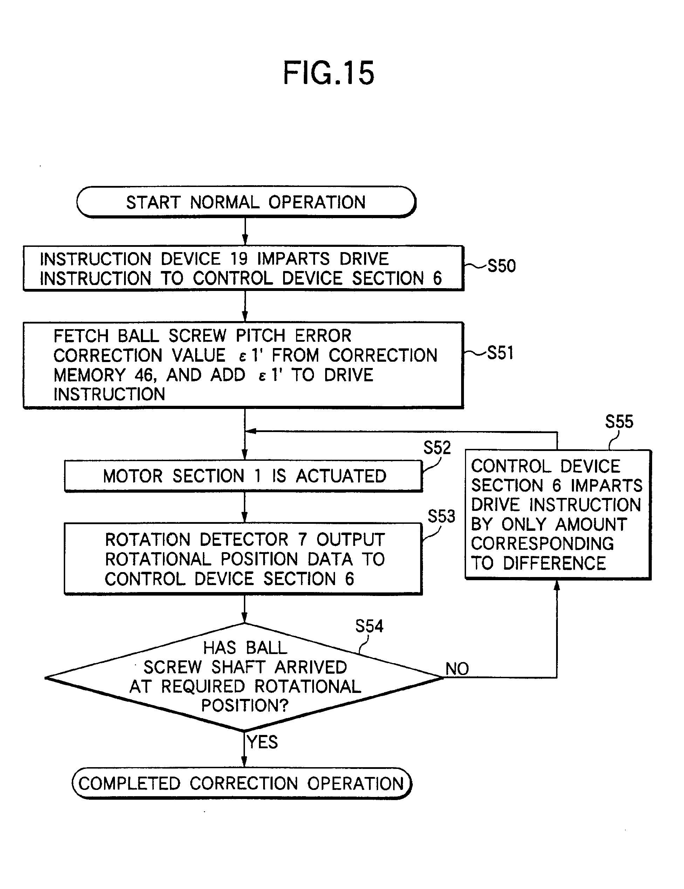

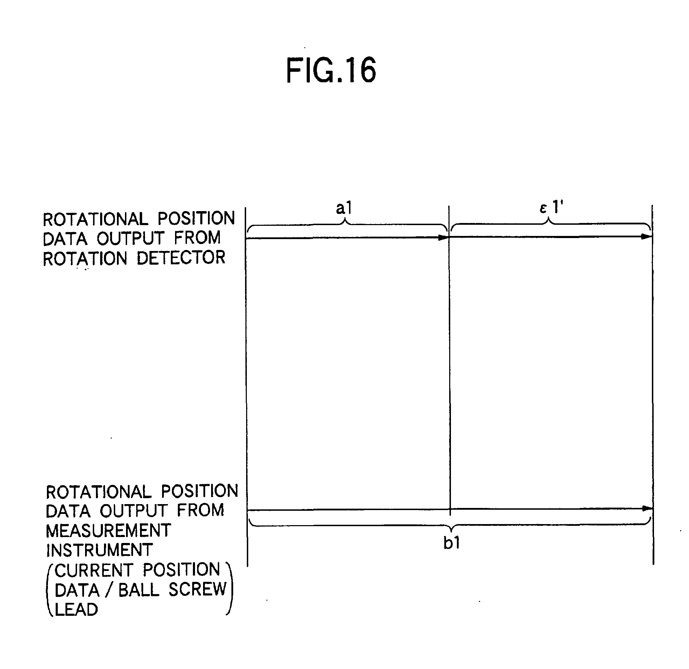

A second embodiment of the present invention will be described by reference to Figs. 11 through 16. Fig. 11 is a fragmentary longitudinal cross-sectional view of a cylinder servo motor; Fig. 12 is a schematic diagram showing the configuration of an electric circuit of the cylinder servo motor; Fig. 13 is a schematic diagram showing the configuration of an electric circuit required for writing into memory a ball screw pitch error correction value of the cylinder servo motor; Fig. 14 is a flowchart for describing the operation of the cylinder servo motor when the ball screw pitch error correction value is written into memory; Fig. 15 is a flowchart for describing the operation of the cylinder servo motor during a normal operation; and Fig. 16 is a conceptual computation rendering of the ball screw pitch error correction value.

As shown in Figs. 11 through 13, reference numeral 46 designates correction memory incorporated into the control device section 6. A ball screw pitch error ε1' (i.e., a travel distance correction value for correcting the accuracy of splitting of a travel distance of a ball screw shaft) such as that shown in Fig. 16 is stored in the correction memory 46. The manner of storing the ball screw pitch error ε1' will be described later.

In other respects, the cylinder servo motor according to the present embodiment is substantially identical in configuration with that described in connection with the first embodiment, and hence repeated explanation is omitted.

Storage of the ball screw pitch error ε1' into the correction memory 46 is performed in the manner as shown in Figs. 13, 14, and 16.

More specifically, in the same manner as in the case of the first embodiment, at a point in time when assembly of a cylinder servo motor has been completed, the reflection mirror 11a is attached to a tip end of the ball screw shaft 5, as shown in Fig. 13. Further, the laser measurement instrument 11 is disposed so as to be able to measure a travel distance of the ball screw shaft 5. Further, there is disposed the controller 12 electrically connected to the laser measurement instrument 11, the correction memory 8, and a connector (not shown) (step S31 shown in Fig. 14). The controller 12 is constituted of the first input section 13, the second input section 14, the differential computing circuit 15, the control section 16, the memory 17, and the memory writer 18.

Power of the control device section 6 is turned on, to thereby activate the inverter circuit 6a, the control circuit 6b, and the rotation detector 7. Further, the laser measurement instrument 11 and the controller 12 are turned on and activated.

Next, a home position signal is input to the control device section 6 from an instruction device 19. When the home position signal is input to the control device section 6, the inverter circuit 6a converts input AC power into three-phase AC power of a desired frequency, a desired voltage, and a desired current. The three-phase AC power is fed to the coil 36 of the stator 3 by way of the lead wire 44, thereby inducing a rotating magnetic field. As a result, the rotor 2 is rotated, thereby returning the servo motor 1 to its home position (step S32 shown in Fig. 14).

At this time, in association with rotation of the rotor 2, the ball screw nut 4 fastened to the load-side shaft end 20a is also rotated, thereby imparting thrust to the ball screw shaft 5 by way of the balls 4a. The ball screw shaft 5 attempts to rotate the ball screw nut 4 by means of static friction. However, the steel balls 26 and 27 are pressed against the detent groove Sbbymeans of the springs 31 and 32. Further, the interval B between the steel balls 26 and 27 and the dimension of the thread groove 5a assume a relationship such as that shown in Fig. 3. Hence, even when the ball screw shaft 5 is situated at an arbitrary position, at least one of the steel balls 26 and 27 remains in the detent groove 5b, and hence the ball screw shaft 5 rotates directly without involving rotation of the ball screw nut 4.

The instruction device 19 imparts to the control device section 6 an instruction signal for actuating the ball screw shaft 5 to a certain sampling point (step S33 shown in Fig. 14). Upon receipt of the instruction signal, the control device section 6 actuates the servo motor 1 in the same manner as mentioned above (step S34 shown in Fig. 14). When the servo motor 1 is driven, the boss 7g and the sign board 7f, which are fixedly fitted to the non-load-side shaft end 20b, also rotate. By means of an optical signal output from the light-emitting section 7c, the light-receiving section 7e reads a pattern of the sign board 7f. The result of reading is converted into a photocurrent. The photocurrent is converted into a photo-voltage by means of an analog circuit (not shown) provided on the printed board 7d, and the photo-voltage is converted into rotational position data by means of a digital circuit (not shown) provided on the printed board 7d.

The rotational position data are output to the control device section 6 (step S35 shown in Fig. 14). The control device 6 compares the rotational position data with the instruction signal, thus determining whether or not the ball screw shaft 5 has arrived at a predetermined rotational position (step S36 shown in Fig. 14). If the ball screw shaft 5 has not yet achieved the predetermined rotational position, power is fed to the coil 36 in order to actuate the ball screw shaft 5, such that a difference becomes zero (step S37 shown in Fig. 14). More specifically, a general servo control operation is performed.

When the predetermined rotational position has been achieved, the rotation detector control section 9 outputs to the control section 16 the rotational position data by way of the first input section 13 of the controller 12. The current position data pertaining to the ball screw shaft 5, which are obtained by means of the measuring instrument 11 measuring the light reflected from the reflection mirror 11a, are output to the control section 16 by way of the second input section 14 of the controller 12 (step S38 shown in Fig. 14).

The rotational position data input to the control section 16 and the current position data pertaining to the ball screw shaft 5 are output to the differential computing circuit 15 of the controller 12. As shown in Fig. 16, the differential computing circuit 16 computes a ball screw pitch error correction value ε1', in conjunction with the control section 16 (step S39 shown in Fig. 14). The thus-computed ball screw pitch error correction value ε1' is temporarily stored in the memory 17.

More specifically, as shown in Fig. 16, a1 designates rotational position data representing a per-rotation absolute rotational position signal output from the rotation detector 7. Further, "b1" represents rotational position data obtained through conversion by means of dividing the current positional data pertaining to the ball screw shaft 5 output from the measuring instrument 11 by the value of a lead of the ball screw. A ball screw pitch error correction value ε1' is computed, by means of effecting computation of b1-a1.

The control section 16 fetches the ball screw pitch error correction value ε1' temporarily stored in the memory 17. The memory writer 18 writes the ball screw pitch error correction value ε1' into the correction memory 46 provided in the control device section 6 (step S40 shown in Fig. 14).

Processing pertaining to steps S33 through S41 is repeated in connection with the overall stroke of the ball screw shaft 5 until writing of the ball screw pitch error correction value ε1' is completed.

As mentioned above, the ball screw pitch error ε1' of the ball screw shaft 5 is stored in the correction memory 46 before shipment of a cylinder servo motor product.

After writing of the ball screw pitch ε1' has been completed, the measurement instrument 11 and the controller 12 are removed from the cylinder servo motor.

Since the cylinder servo motor according to the second embodiment of the present invention is constituted in the manner as mentioned above, the cylinder servo motor operates according to a flowchart shown in Fig. 15 during normal operation.

The instruction device 19 imparts to the control device section 6 an instruction signal for actuating the ball screw shaft 5 to a certain sampling point (step S50). Upon receipt of the instruction signal, the control device section 6 fetches the ball screw pitch error ε1' from the correction memory 46, and the thus-fetched error is added to the instruction signal (step S51). More specifically, a signal which is the sum of the instruction value imparted from the instruction device 19 and the ball screw pitch error ε1' is taken as an instruction value to be sent to a motor.

After completion of the processing, the inverter circuit 6a converts input AC power into three-phase AC power of a desired frequency, a desired voltage, and a desired current. The three-phase AC power is fed to the coil 36 of the stator 3 by way of the lead wire 44, thereby inducing a rotating magnetic field. As a result, the servo motor 1 is actuated (step S52). In association with rotation of the rotor 2, the ball screw nut 4 fastened to the load-side shaft end 20a is also rotated, thereby imparting thrust to the ball screw shaft 5 by way of the balls 4a. The ball screw shaft 5 attempts to rotate the ball screw nut 4 by means of static friction. However, the steel balls 26 and 27 are pressed against the detent groove 5b by means of the springs 31 and 32. Further, the interval B between the steel balls 26 and 27 and the dimension of the thread groove 5a assume a relationship such as that shown in Fig. 3. Even when the ball screw shaft 5 is situated at an arbitrary position, at least one of the steel balls 26 and 27 remains in the detent groove 5b, and hence the ball screw shaft 5 rotates directly without involving rotation of the ball screw nut 4.

When the servo motor 1 is driven, the boss 7g and the sign board 7f, which are fixedly fitted to the non-load-side shaft end 20b, also rotate. By means of an optical signal output from the light-emitting section 7c, the light-receiving section 7e reads a pattern of the sign board 7f. The result of reading is converted into a photocurrent. The photocurrent is converted into a photo-voltage by means of an analog circuit (not shown) provided on the printed board 7d, and the photo-voltage is converted into rotational position data by means of a digital circuit (not shown) provided on the printed board 7d.

Next, the thus-corrected rotational position data are output to the control device section 6 (step S53). The control device 6 compares the rotational position data with the instruction signal (to which the ball screw pitch error ε1' has been added) , thus determining whether or not the ball screw shaft 5 has arrived at a predetermined rotational position (step S54). If the ball screw shaft 5 has not yet achieved the predetermined rotational position, power is fed to the coil 36 in order to actuate the ball screw shaft 5, such that a difference becomes zero (step S55). More specifically, a general servo control operation is performed.

When a difference between the rotational position data and the instruction signal has become zero, a power supply to the coil 36 is disconnected, thereby actuating the ball screw shaft 5 to the instructed position.

As has been described, in the second embodiment, the rotational position data which has been corrected through use of the per-rotation split angle correction value ε of the rotation detector 7 maybe employed as the rotational position data output from the rotation detector 7, in the same manner as in the first embodiment. In this case, it goes without saying that the ball screw pitch error correction value ε1' to be stored in the correction memory 46 corresponds to data determined by subtracting (rotational position data taking into account the per-rotation split angle correction value ε of the rotation detector 7) from (data obtained by means of dividing the current positional data pertaining to the ball screw shaft 5 output from the measurement instrument 11 by the ball screw lead and converting the result of division into rotational position data).

As has been described, in the second embodiment, the accuracy of splitting of a travel distance of the ball screw shaft 5 can be corrected at the time of control of the servo motor 1, through use of the ball screw pitch error correction value ε1'. As a result, a high-precision cylinder servo motor can be provided.

A necessity of measuring correction of an accumulated lead error in a ball screw pitch of a cylinder servo motor at a location to which the cylinder servo motor is to be shipped is obviated, and by extension there is obviated a necessity of providing a high-precision position measurement instrument at a location to which the cylinder servo motor is to be shipped. Moreover, the time required for assembling and adjusting a machine having the cylinder servo motor built therein becomes shorter. Even when the cylinder servo motor is replaced, there is obviated a necessity of again measuring correction of an accumulated lead error in ball screw pitch at a location to which the cylinder servo motor is to be shipped.

A necessity of wiring a line between the servo motor 1, the rotation detector 7, and the control device section 6 at a location to which the cylinder servo motor is to be shipped is obviated, thereby improving workability. Further, there is obviated a necessity of discussing a location where a controller is to be disposed, thereby improving the freedom of mechanical design.

There is no necessity of using, as the control section 9 for controlling the rotation detector 7, a circuit or software for correcting an accumulated lead error in the ball screw pitch 5 of the cylinder servo motor. Hence, a standard device can be employed as the control section.

Since the absolute rotation detector 7 is used, the position of the ball screw shaft is backed up even when power is turned off. Hence, there is no necessity of returning the ball screw shaft 5 to its home position. An output from the rotation detector 7 and the ball screw pitch error correction value ε1' for correcting the accuracy of splitting a travel distance of the ball screw shaft 5 can be handled simultaneously. Since the servo motor section can be controlled on the basis of the position of a correct magnetic pole, good efficiency is achieved. Further, high-precision control of the cylinder servo motor can be effected, through use of the ball screw pitch error correction value ε1'used for correcting the accuracy of splitting of a travel distance of the ball screw shaft 5.

Since the cylinder servo motor does not use any coupling for coupling the rotary shaft 20 with the ball screw shaft 5, which would have hitherto been employed, the cylinder servo motor becomes compact despite having a large stroke. Hence, the cylinder servo motor is wholly made compact, and the number of components is reduced.

The electric circuit of the rotation detector 7 is doubly covered by the rotation detector cover 42 and the chassis 43. Further, a hole is formed in the rotary shaft 20, and the hole is the non-penetrating hole 20c. Thus, good airtightness is ensured, and reliability of the cylinder servo motor against an external environment is improved.

As schematically shown in Fig. 10, the previously-described components can be assembled from one direction, thereby improving the ease of assembly of a cylinder servo motor. More specifically, in relation to the load-side bracket 28 having a detent mechanism and the oil seal 41 incorporated therein beforehand, there can be sequentially assembled the rotor 2 having the ball screw nut 4 and the ball screw shaft 5 incorporated therein beforehand, the load-side ball bearings 22 and 23, the non-load-side ball bearing 24, the inner ring fastening nut 40, the outer ring fastening nut 39, the stator 3, the non-load-side bracket 38, the absolute rotation detector 7, and the control device section 6.

The lip section 41a of the oil seal 41 is in contact with the outer peripheral surface 4c of the fastening flange 4b of the ball screw nut 4. Hence, the dimension of the oil seal section can be shortened in the axial direction, thereby rendering the cylinder servo motor more compact.

Since the detent mechanism makes rolling contact, abrasion of a contact surface is diminished, thereby prolonging the life span of the detection mechanism and reducing friction loss (by extension, input power is diminished, and energy savings is attained).

### Third Embodiment

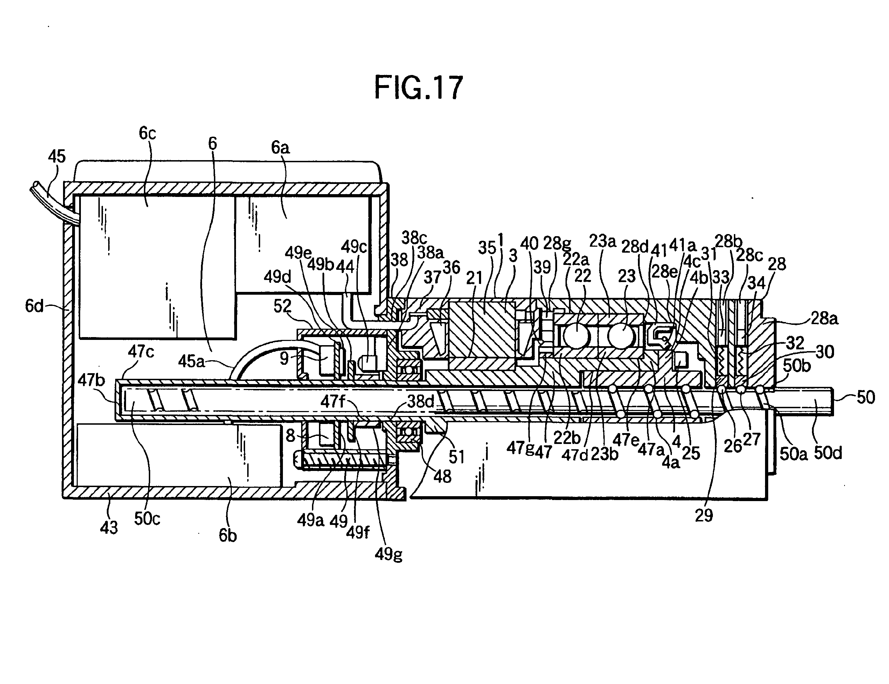

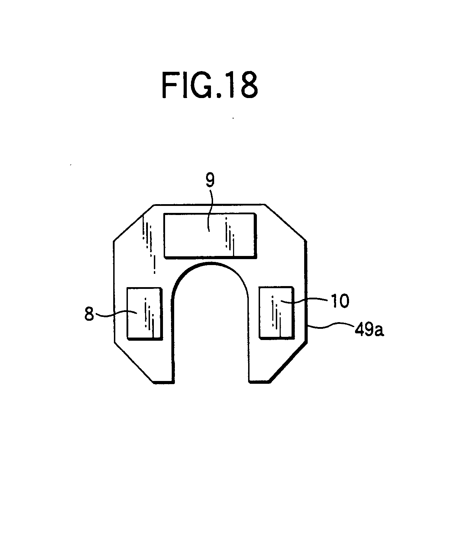

A third embodiment of the present invention will be described by reference to Figs. 17 and 18. Fig. 17 is a fragmentary longitudinal cross-sectional view of a cylinder servo motor, and Fig. 18 is a diagram showing the geometry of a printed board used in the rotation detector.

As shown in Fig. 17, a non-load-side shaft end 47b of a rotary shaft 47 (corresponding to the rotary shaft 20 described in connection with the first embodiment) penetrates through an absolute rotation detector 49 (corresponding to the absolute rotation detector 7 described in connection with the first embodiment) and extends to the neighborhood of an end section 6d of the control device section 6. In association with elongation of the rotary shaft 47, a non-load-side shaft end 50c of a ball screw shaft 50 (corresponding to the ball screw shaft 5 described in connection with the first embodiment) is extended to the neighborhood of the non-load-side shaft end 47b of the rotary shaft 47. In order to extend the rotary shaft 47 as described above, a printed board 49d of the rotation detector 49 is formed to assume a C-shaped geometry as shown in Fig. 18, and a hole is formed in a rotation detector cover 52 (corresponding to the rotation detector cover 42 described in connection with the first embodiment) so that the rotary shaft 47 can penetrate through the hole.

As shown in Fig. 17, reference numeral 47a designates a Ioad-side shaft end; 47c designates a non-penetrating hole of the rotary shaft 47; 47d designates an internal peripheral section of the rotary shaft 47; 47e designates a shoulder section of the rotary shaft 47; 47f designates a boss mount section on the rotary shaft 47; 47g designates a male screw section of the rotary shaft 47; 48 designates a non-load-side bearing; 49a designates a detection section of the absolute rotation detector 49; 49b designates a rotation section of the absolute rotation detector 49; 49c designates a light-emitting section of the absolute rotation detector 49; 49e designates a light-receiving section of the absolute rotation detector 49; 49f designates a sign board of the absolute rotation detector 49; 49g designates a boss of the absolute rotation detector 49; 50a designates a screw thread of the ball screw shaft 50; 50b designates a detent groove of the ball screw shaft 50; 50c designates a non-load-side shaft end of the ball screw shaft 50; 50d designates a load-side shaft end of the ball screw shaft 50; and 51 designates a rotor corresponding to the rotor 2 described in connection with the first embodiment. Since the cylinder servo motor according to this embodiment is substantially identical in construction with that described in connection with the first embodiment, repeated explanation thereof is omitted.

The cylinder servo motor according to the third embodiment is identical in operation with that described in connection with the first embodiment. By means of imparting a position instruction to the servo motor, the ball screw shaft 50 corresponding to the ball screw shaft 5 is actuated to a predetermined position.

Needless to say, the third embodiment can be applied to the second embodiment.

As has been described, in addition to yielding the same advantages as those yielded in the first and second embodiments, the third embodiment also yields an advantage of the ability to realize a stroke of longer linear movement even when a cylinder servo motor of a given dimension is employed.

### Fourth Embodiment

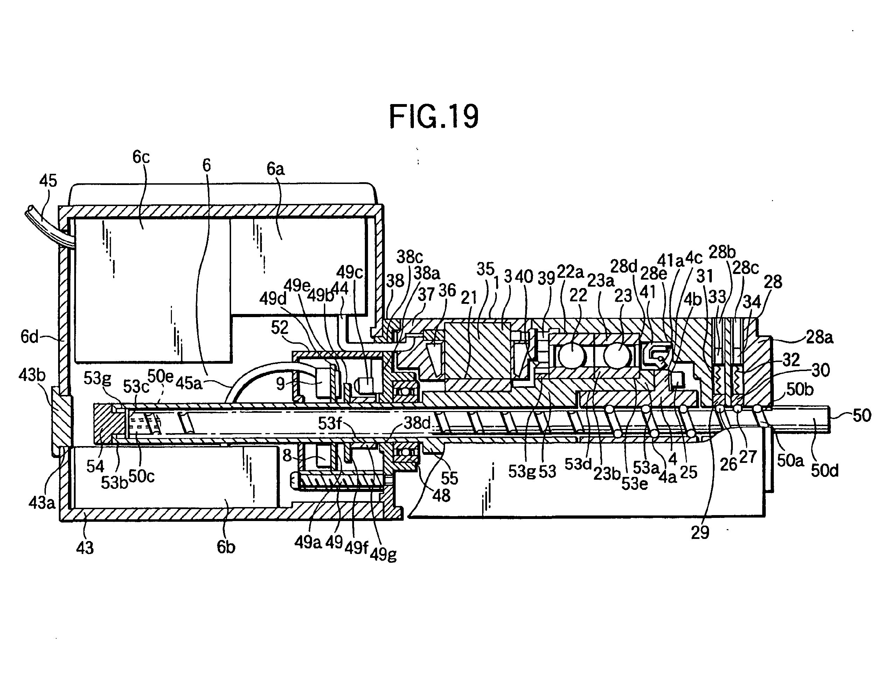

A fourth embodiment of the present invention will be described through use of Fig. 19 (i.e., a fragmentary longitudinal cross-sectional view showing a cylinder servo motor).

As shown in Fig. 19, a non-load-side shaft end 53b of a rotary shaft 53 (corresponding to the rotary shaft 47 according to the third embodiment) penetrates through the rotation detector 49 and is extended to the neighborhood of the end section 6d of the control device section 6. A through hole 53c is formed in the rotary shaft 53 so as to extend from a load-side shaft end 53a to the non-load-side shaft end 53b in the direction of the rotary shaft 53.

In association with elongation of the rotary shaft 53, the non-load-side shaft end 50c of the ball screw shaft 50 is extended to the neighborhood of the non-load-side shaft end 53b of the rotary shaft 53. In order to elongate the rotary shaft 53 in the manner as mentioned above, a printed board 49d of the rotation detector 49 is produced into a C-shaped form, as shown in Fig. 18. Further, a hole through which the rotary shaft 53 can penetrate is formed in the rotation detector cover 52.

A female thread 53g is formed inside the non-load-side shaft end 53b of the through hole 53c. A through hole cover 54 having a male screw formed thereon is removably screw-engaged with the female thread 53g, thereby closing the non-load-side shaft end 53b of the through hole 53c.

A through hole 43a opposing the through hole cover 54 is formed in the end 6d of the chassis 43, and a removable sealing cover 43b is attached to the through hole 43a.

A female thread 50d is axially provided on the non-load-shaft end 50c of the ball screw shaft 50.

The through hole cover 54 is provided for preventing entry of oil or an oil mist from the through hole 53c of the non-load-side shaft end 53b of the rotary shaft 53. Further, the sealing cover 43b is provided for preventing entry of dust into the through hole 43a of the chassis 43, which would otherwise cause deterioration of the rotation section 49b of the rotation detector 49 in an external environment. Thus, good reliability of the cylinder servo motor against the external environment; i.e., the same advantage as described in connection with the first through third embodiments, can be maintained.

As shown in Fig. 19, reference numeral 53a designates a load-side shaft end of the rotary shaft 53; 53c designates a non-penetrating hole of the rotary shaft 53; 53d designates an internal peripheral section of the rotary shaft 53; 53e designates a shoulder section of the rotary shaft 53; 53f designates a boss mount section of the rotary shaft 53; 53g designates a female thread section of the rotary shaft 53; and 55 designates a rotor corresponding to the rotor 51 described in connection with the third embodiment.

The cylinder servo motor according to the present embodiment is substantially identical in configuration with that described in connection with the third embodiment, and hence repeated explanation thereof is omitted.

In the cylinder servo motor according to the present embodiment, the sealing cover 43b is removed from the chassis 43 while the cylinder servo motor is mounted on a machine (not shown). Subsequently, the through hole cover 54 is removed, and an adjustment jig (not shown) on which is formed a male screw to be screw-engaged with the female thread 50d formed on the non-load-side shaft end 50c of the ball screw shaft 50 is attached to the ball screw shaft 50. The adjustment jig is manually pushed and pulled, thereby enabling direct, manual actuation of the ball screw shaft 50.

During normal operation of the cylinder servo motor having an amplifier incorporated therein according to the present embodiment, the cylinder servo motor operates in the same manner as in the third embodiment. By means of imparting a position instruction to the cylinder servo motor, the ball screw shaft 50 is actuated to a predetermined position.

It goes without saying that the third embodiment can be applied also to the first and second embodiments.

In addition to yielding the same advantages as those yielded in the first through third embodiments, the fourth embodiment yields an advantage of the ability to enable manual positioning of the ball screw shaft 50 while the cylinder servo motor is mounted on a machine, thereby improving the workability and operability of the cylinder servo motor.

### Fifth Embodiment

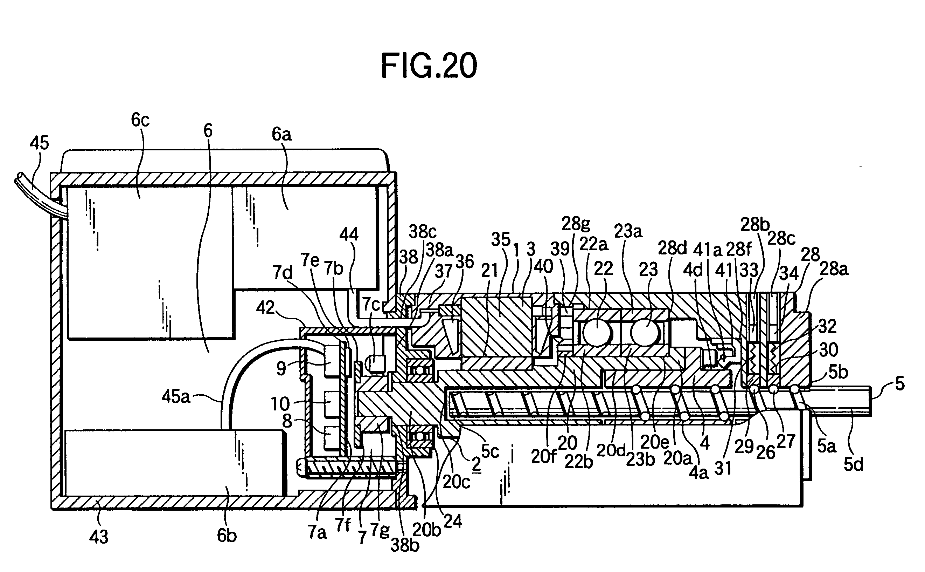

A fifth embodiment of the present invention will now be described by reference to Fig. 20 (i.e., a fragmentary longitudinal cross-sectional view of the cylinder servo motor) .

As shown in Fig. 20, the oil seal 41 is fixedly fitted to an oil seal housing 28f of the load-side bracket 28. A lip section 41a of the oil seal 41, which is smaller in diameter than the outer peripheral section 4c of the flange section 4b of the ball screw nut 4, remains in contact with an external outer peripheral surface 4d of the ball screw nut 4.

Since the cylinder servo motor according to the present embodiment is substantially identical in configuration with that described in connection with the first embodiment, repeated explanation thereof is omitted. Moreover, the cylinder servo motor according to the present embodiment is substantially identical in operation with that described in connection with the first embodiment. By means of imparting a position instruction to the cylinder servo motor, the ball screw shaft 5 is actuated to a predetermined position.

Needless to say, the fifth embodiment can be applied also to the second through fourth embodiments.

The lip section 41a of the oil seal 41 is held in contact with the external outer peripheral surface 4d of the ball screw nut 4. Hence, the sliding diameter of a contact portion of the lip section 41a of the oil seal 41 becomes smaller, and the peripheral speed of the contact portion also becomes smaller. As a result, in addition to yielding the same advantages as those yielded in the first embodiment, the fifth embodiment yields an advantage of the ability to improve the abrasion resistance of the oil seal 41 and to prolong the life span of the cylinder servo motor.

### Sixth Embodiment

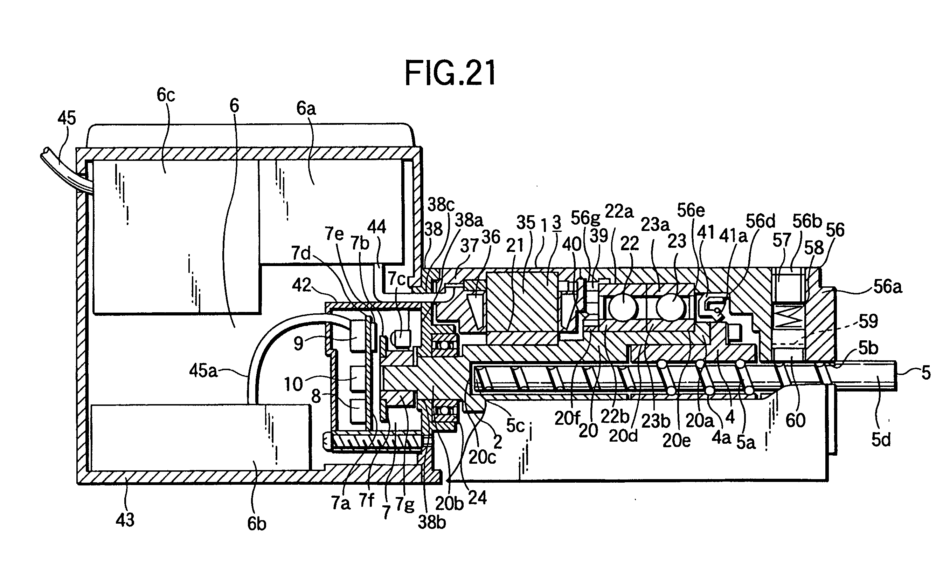

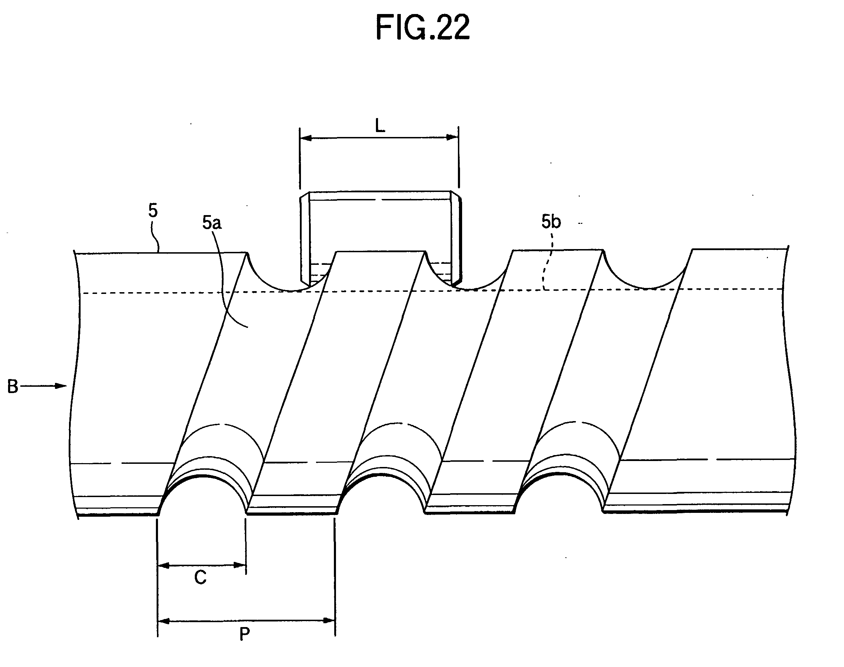

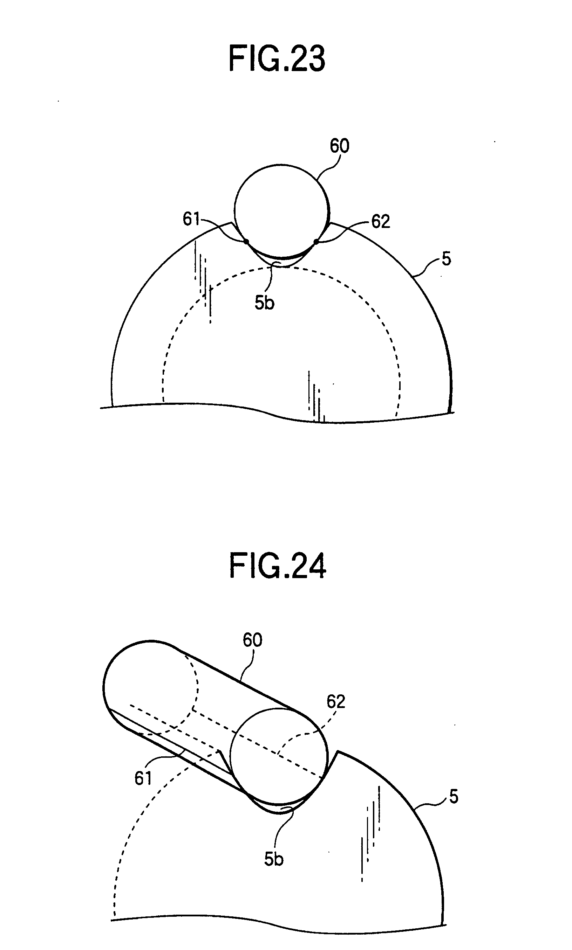

A sixth embodiment of the present invention will be described by reference to Figs. 21 through 24. Fig. 21 is a fragmentary longitudinal cross-sectional view showing a cylinder servo motor. Fig. 22 is an operation descriptive view of the detent mechanism of the cylinder servo motor. Fig. 23 is a view from direction B shown in Fig. 22. Fig. 24 is a perspective view showing that the detent mechanism of the cylinder servo motor according to the fifth embodiment is in a contact state.

As shown in Fig. 21, rotation of the ball screw shaft 5―the shaft being supported by the ball screw nut 4 by way of the balls 4a so as to be movable in the axial direction thereof―which would otherwise be caused when the ball screw shaft 5 is moved in the axial direction thereof, is prevented by a detent mechanism shown in detail in Figs. 22 through 24.

The detent mechanism comprises a substantially V-shaped single detent groove 5b; one cylindrical roller 60; one roller bearing 59; a spring 58 for pressing the cylindrical roller 60 at all times; and a lock screw 57. The V-shaped single detent groove 5b is formed in the neighborhood of the load-side shaft end 5d of the ball screw shaft 5 and in parallel with the axial direction of the ball screw shaft 5. The detent groove 5b has a depth substantially identical with the depth of the thread groove 5a or a depth slightly shallower than the depth of the screw thread 5a. As shown in Fig. 23, the cylindrical roller 60 comes into contact with the detent groove 5b at two contact points 61 and 62. The roller bearing 59 is provided in a hole 56b formed in an end section 56a of the load-side bracket 56 (corresponding to the load-side bracket 28 described in connection with the first embodiment) . The roller bearing 59 rotatably supports the cylindrical roller 60. The lock screw 57 is screw-engaged with the hole 56b formed in the end section 56a of the load-side bracket 56 and adjusts a rolling contact pressure arising between the detent groove 5b and the cylindrical roller 60 from a fastening position. As shown in Fig. 22, provided that a pitch of the thread groove 5a is taken as P, the width of the thread groove 5a is taken as C, and the length of the cylindrical roller is taken as L, the detent mechanism assumes a relationship 2C<L<P. More specifically, even when the ball screw shaft 5 is located at an arbitrary position, there is ensured a dimensional relationship such that a portion of the cylindrical roller 60 is located in the detent groove 5b at all times.

As shown in Fig. 21, the housing shoulder 56d, the oil seal housing 56e, and the female thread 56g correspond to the housing shoulder 28d, the oil seal housing 28e, and the female thread 56g described in connection with the first embodiment.

In other respects, the cylinder servo motor according to the present embodiment is substantially identical in configuration with that described in connection with the first embodiment, and hence repeated explanation thereof is omitted.

Next will be described the operation of the cylinder servo motor. By means of imparting a position instruction to the cylinder servo motor, the rotor 2 and the ball screw nut 4 are moved in the same manner as in the first embodiment. As a result of rotation of the rotor 2 and the ball screw nut 4, thrust is imparted to the ball screw shaft 5 by way of the balls 4a. By means of static friction, the ball screw shaft 5 attempts to rotate along with the ball screw nut 4. However, the cylindrical roller 60 is pressed against the detent groove 5b by means of the spring 58, and the relationship between the length L of the cylindrical roller 60, the dimension C of the thread groove 5a, and the pitch P of the thread groove 5a is set to 2C<L<P. Hence, the contact sections 61 and 62 of the cylindrical roller 60 inevitably remain in contact with the detent groove 5b. Hence, the ball screw shaft 5 is actuated to a predetermined position without involving rotation of the ball screw nut 4.

Needless to say, the detent mechanism described in the sixth embodiment can be replaced with any of those described in connection with the second through fifth embodiments.

As has been described, in addition to yielding the same advantages as those yielded in the first embodiment (excluding the effect of the detent mechanism) , the sixth embodiment yields an advantage of the ability to reduce the overall length of the cylinder servo motor, because only one detection mechanism provided in the axial direction of the rotary shaft acts as a whirl stop.

In the first through fifth embodiments, the detent mechanism is disposed in parallel with and in line with the axial direction. If at least one ball to be brought into contact with a detent groove is located in a section where the ball does not cross the detent groove, the number of detent grooves to be formed in the ball screw shaft 5 may be increased such that two detent grooves are provided so as to oppose each other or such that a plurality of detent grooves are provided radially.

In the first and second embodiments, the reflectionmirror 11a is attached to the tip end of the ball screw shaft 5, thereby measuring a travel distance. However, if the tip end of the ball screw shaft 5 is machined into a mirrored surface by means of abrasion, the mirror 11a becomes unnecessary. Needless to say, a necessity of removing the mirror 11a after measurement becomes obviated.

The first through sixth embodiments have described the built-in control device section 6. However, if a cylinder servo motor main unit and an absolute rotation detector are integrated together, the control device section 6 is identified by an ID code, and the cylinder servo motor is always used in one-to-one correspondence with the control device section 6, then the control device section 6 may be separated rather than incorporated. Even in the case of a cylinder servo motor of such a type, in the present specification a cylinder servo motor main unit, a detector, and a control device section are referred to as being integrated.

As has been described, the present invention provides a cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
a rotation detector for detecting a rotary position of the servo motor;
control means for controlling the rotation detector and the servo motor; and
storage means which is provided in the control means and stores a travel distance correction value to be used for correcting the accuracy of splitting of a travel distance of the ball screw shaft at the time of control of the servo motor,
wherein the cylinder servo motor main unit, the rotation detector, and the control means are integrated. As a result, at the time of control of the servo motor, the accuracy of splitting of a travel distance of the ball screw shaft can be corrected through use of the travel distance correction value. Thus, there can be obtained a high-precision cylinder servo motor.

A necessity of measuring correction of an accumulated lead error in a ball screw pitch of a cylinder servo motor at a location to which the cylinder servo motor is to be shipped is obviated, and by extension there is obviated a necessity of a high-precision position measurement instrument being provided at a location to which the cylinder servo motor is to be shipped. Moreover, the time required for assembling and adjusting a machine having the cylinder servo motor built therein becomes shorter. Even when the cylinder servo motor is replaced, there is obviated a necessity of again measuring correction of an accumulated lead error in ball screw pitch at a location to which the cylinder servo motor is to be shipped.

A necessity of wiring a line between the servo motor, the rotation detector, and the control device section at a location to which the cylinder servo motor is to be shipped is obviated, thereby improving workability.

According to the present invention, the storage means for storing the travel distance correction value is provided on the control means for controlling the rotation detector. Hence, in addition to the foregoing advantages, the present invention also yields an advantage that, even when the servo motor main unit and the rotation detector have been replaced with new ones for reasons of mechanical life, there is no necessity of again correcting an accumulated lead error of a ball screw pitch of a cylinder servo motor at a location to which the cylinder servo motor is to be shipped.

According to the present invention, the storage means for storing the travel distance correction value is provided on the control means for controlling the servo motor. Hence, in addition to the foregoing advantages, the present invention also yields an advantage of obviating a circuit or software for correcting an accumulated lead error in the ball screw pitch of the cylinder servo motor and an advantage of the ability to use a standard device.

The present invention also provides cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
an absolute rotation detector for detecting an absolute rotary position of the servo motor;
storage means for storing a per-rotation split angle error correction value of the absolute rotation detector;
first control means for controlling the absolute rotation detector;
second control means for controlling the servo motor,
wherein the cylinder servo motor main unit, the rotation detector, the first control means, and the second control means are integrated together, and a travel distance correction value for correcting the accuracy of splitting of a travel distance of the ball screw shaft at the time of control of the servo motor is stored as being combined with the per-rotation split angle error correction value of the absolute rotation detector. Hence, in addition to the foregoing advantages, the present invention also yields an advantage that, even when the servo motor main unit and the rotation detector have been replaced with new ones for reasons of mechanical life, there is no necessity of again correcting an accumulated lead error of a ball screw pitch of a cylinder servo motor at a location to which the cylinder servo motor is to be shipped. Since the absolute rotation detector is used, the position of the ball screw shaft is backed up even when power is turned off. Hence, there is no necessity of returning the ball screw shaft to its home position. Further, the signal output from the rotation detector to the control means of the servo motor takes into account a travel distance correction value to be used for correcting the accuracy of splitting of a travel distance of the ball screw shaft. Hence, the control means of the servo motor can handle the signal output from the rotation detector equally with an ordinary signal which does not take into account a travel distance correction value to be used for correcting the accuracy of splitting a travel distance of the ball screw shaft. Control load for correcting the accuracy of splitting of a travel distance of the ball screw shaft exerted on the control means of the servo motor is little. Hence, a servo system realizes good trackability. The control means of the servo motor can be embodied through use of a standard device without use of a special correction circuit or amendment software . Even when the control means of the servo motor is replaced and repaired, a high degree of precision of the control device section can be sustained.

Further, the storage means for storing a per-rotation split angle error correction value of the absolute rotation detector can be used also as the storage means for storing the travel distance correction value to be used for correcting the accuracy of splitting of a travel distance of a ball screw shaft.

The present invention also provides a cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
an absolute rotation detector for detecting an absolute rotary position of the servo motor;
first control means for controlling the absolute rotation detector; and
second control means for controlling the servo motor, wherein
the cylinder servo motor main unit, the rotation detector, the first control means, and the second control means are integrated together, and the second control means is provided with storage means for storing the travel distance correction value used for correcting the accuracy of splitting a travel distance of the ball screw shaft at the control of the servo motor. In addition to the advantage of the invention, since the absolute rotation detector is used, the position of the ball screw shaft is backed up even when power is turned off. Hence, there is no necessity of returning the ball screw shaft to its home position. Further, the control means of the servo motor can handle the signal output from the rotation detector simultaneously with an ordinary signal which takes into account a travel distance correction value to be used for correcting the accuracy of splitting a travel distance of the ball screw shaft. Since the servo motor section can be controlled on the basis of a correct position of a magnetic pole. High-precision control of the cylinder servo motor can be efficiently effected, through use of the travel distance to be used for correcting the accuracy of splitting a travel distance of a ball screw shaft. Further, a circuit or software for correcting an accumulated lead error correction in a ball screw pitch of a cylinder servo motor is not required as control means for controlling the rotation detector. Hence, a standard device can be used as the control means.

According to the present invention, the rotor of the servo motor is constituted of the rotary shaft and a permanent magnet, the rotary shaft being rotatably supported by a load-side bearing supported by a load-side bracket and by a non-load-side bearing supported by a non-load-side bracket, at least the load-side end of the rotary shaft being released, a through hole being formed in the rotary shaft so as to extend in an axial direction, and the permanent magnet being disposed opposite the stator fixed to the rotary shaft with a predetermined clearance therebetween. Further, the ball screw nut is constituted of a ball circulation mechanism and is mounted on a load-side shaft end of the rotary shaft. The ball screw shaft is screw-engaged with the ball screw nut so as to become movable in only the axial direction such that a non-load-side shaft end of the ball screw shaft is housed in the through hole of the rotary shaft and such that a load-side end of the ball screw shaft protrudes from the load-side bracket. A rotation portion of the rotation sensor is coupled to a non-load-side portion of the rotary shaft protruding from the hole formed in the non-load-side bracket and is covered with a rotation sensor cover. The control means of the servo motor is disposed on a part of the non-load-side bracket distant from the stator, and the control means and the rotation sensor cover are covered with a chassis to be fastened to the non-load-side bracket. Since there is obviated use of any coupling for coupling a rotary shaft with a ball screw shaft, which would have hitherto been employed, the cylinder servo motor becomes compact despite having a long stroke. Hence, the cylinder servo motor is made compact overall, and the number of components is reduced.

The rotation portion of the rotation sensor is doubly covered by the rotation sensor cover and the chassis. Accordingly, reliability of the cylinder servo motor against an external environment is improved.

According to the present invention, the non-load-side end of the rotary shaft and the through hole are elongated to a position where the control means of the servo motor is disposed. Further, in association with elongation of the non-load-side end and elongation of the through hole, the non-load-side shaft end of the ball screw shaft is elongated. Hence, in addition to the advantages set forth, the present invention yields an advantage of the ability to realize a stroke of longer linear movement even when a cylinder servo motor of a given dimension is employed.

Further, according to the present invention, a non-load-side of the through hole of the rotary shaft is opened, and a cover for covering the open side is removably provided. Further, a through hole is formed in a portion of the chassis opposing the cover with reference to an axial direction of the rotary shaft. Moreover, the through hole formed in the chassis is provided with a removable cover. Accordingly, in addition to the advantages set forth, the present invention yields an advantage of the ability to enable manual positioning of the ball screw shaft while the cylinder servo motor is mounted on a machine, thereby improving workability and operability.

According to the present invention, the load-side shaft bearing is constituted of a ball bearing. An outer ring of the ball bearing is fixedly sandwiched between a shoulder section formed on an internal peripheral wall of the load-side bracket and an outer ring fastening nut to be screw-engaged with an internal peripheral wall of the load-side bracket. An inner ring of the ball bearing is fixedly sandwiched between a ball screw nut fastening shoulder section formed on the load-side shaft end of the rotary shaft of the servo motor and an inner ring fastening nut to be screw-engaged with the rotary shaft of the servo motor. An inner diameter of the inner ring of the ball bearing is made greater than an outer diameter of the rotor of the servo motor. As a result, in addition to the advantages set forth, the present invention yields an advantage of the ability to assemble a cylinder servo motor from one direction, thereby improving workability.

According to the present invention, the ball screw nut fastening shoulder is formed on the load-side shaft end of the rotary shaft, and a fastening flange section is formed on the ball screw nut. A portion of the ball screw nut is fitted into the through hole formed in the load-side shaft end of the rotary shaft. The fastening flange section is brought into contact with and screw-engagedwith the ball screw nut fastening shoulder section. Thereby, the ball screw nut is fastened to the load-side shaft end of the rotary shaft, and an oil seal is held on the load-side bracket. A lip section of the oil seal is brought into contact with an outer peripheral surface of the ball screw nut fastening flange. As a result, in addition to the advantages set forth, the present invention yields an advantage of the ability to shorten the oil seal section in an axial direction thereof, thereby rendering the cylinder servo motor more compact.

According to the present invention, a ball screw nut fastening shoulder is formed on a load-side shaft end of the rotary shaft, and a fastening flange section is formed at a position closer to the center of the ball screw nut. A portion of the ball screw nut is fitted into a through hole section formed in the load-side shaft end of the rotary shaft, and the fastening flange section is brought into contact with and screw-engaged with the ball screw nut fastening shoulder section. As a result, the ball screw nut is fastened to the load-side shaft end of the rotary shaft, and an oil seal is held on the load-side bracket. A lip section of the oil seal is brought into contact with an outer peripheral surface at the shaft end of the ball screw nut. Hence, in addition to the advantages set forth, the present invention yields an advantage of the ability to improve abrasion resistance of the oil seal and elongate the life span of the cylinder servo motor, because a sliding diameter of the lip section of the oil seal becomes smaller and a circumferential speed of a contact section becomes low.

According to the present invention, a detent groove is formed in an outer peripheral section of the ball screw shaft, wherein the detent groove has substantially the same depth as that of a thread groove or a depth shallower than that of the thread groove and extends in an axial direction. Further, the ball screw shaft has at least two balls to be inserted into the detent groove, and a spring for pressing the balls toward the detent groove at all times. The balls are disposed such that at least one of the balls is situated in the detent groove at all times. Hence, in addition to the advantages set forth, the present invention yields an advantage of diminishing abrasion of the contact surface, thereby prolonging the life span of a whirl stop and diminishing friction loss of the whirl stop (by extension, input power is diminished, thereby realizing energy savings), because the whirl stop makes rolling contact.

According to the present invention, a detent groove is formed in an outer peripheral section of the ball screw shaft, wherein the detent groove has substantially the same depth as that of a thread groove or a depth shallower than that of the thread groove and extends in an axial direction. Further, the ball screw shaft has at least one cylindrical roller which is to be inserted into the detent groove and is longer than a screw pitch of the ball screw shaft, and a spring for pressing the cylindrical ball toward the detent groove at all times. Hence, in addition to the advantages set forth, the present invention yields an advantage of shortening the overall length of a cylinder servo motor, because one detent unit provided in the direction of the rotary shaft acts as a whirl stop.

### Industrial Applicability

As has been described, a cylinder servo motor according to the present invention is suitable for use with a measuring instrument, a spot welding machine, an NC machine, and a plant.

## Claims

1. A cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
a rotation detector for detecting a rotary position of the servo motor;
control means for controlling the rotation detector and the servo motor; and
storage means which is provided in the control means and stores a travel distance correction value to be used for correcting the accuracy of splitting of a travel distance of the ball screw shaft at the time of control of the servo motor, wherein
the cylinder servo motor main unit, the rotation detector, and the control means are integrated.

2. The cylinder servo motor according to claim 1, wherein the storage means for storing the travel distance correction value is provided on the control means for controlling the rotation detector.

3. The cylinder servo motor according to claim, wherein the storage means for storing the travel distance correction value is provided on the control means for controlling the servo motor.

4. A cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
an absolute rotation detector for detecting an absolute rotary position of the servo motor;
storage means for storing aper-rotation split angle error correction value of the absolute rotation detector;
first control means for controlling the absolute rotation detector;
second control means for controlling the servo motor,
wherein the cylinder servo motormain unit, the rotation detector, the first control means, and the second control means are integrated together, and a travel distance correction value for correcting the accuracy of splitting of a travel distance of the ball screw shaft at the time of control of the servo motor is stored as being combined with the per-rotation split angle error correction value of the absolute rotation detector.

5. A cylinder servo motor comprising:
a servo motor having a rotor and a stator;
a cylinder servo motor main unit which is connected to a rotary shaft of the rotor of the servo motor by way of a ball screw nut and which has a ball screw shaft, the ball screw shaft moving in an axial direction;
an absolute rotation detector for detecting an absolute rotary position of the servo motor;
first control means for controlling the absolute rotation detector; and
second control means for controlling the servo motor, wherein
the cylinder servo motor main unit, the rotation detector, the first control means, and the second control means are integrated together, and the second control means is provided with storage means for storing the travel distance correction value used for correcting the accuracy of splitting a travel distance of the ball screw shaft at the control of the servo motor.

6. The cylinder servo motor according to any one of claims 1 through 5, wherein the rotor of the servo motor is constituted of the rotary shaft and a permanent magnet, the rotary shaft being rotatably supported by a load-side bearing supported by a load-side bracket and by a non-load-side bearing supported by a non-load-side bracket, at least the load-side end of the rotary shaft being released, a through hole being formed in the rotary shaft so as to extend in an axial direction, and the permanent magnet being disposed opposite the stator fixed to the rotary shaft with a predetermined clearance therebetween; the ball screw nut is constituted of a ball circulation mechanism and is mounted on a load-side shaft end of the rotary shaft; the ball screw shaft is screw-engaged with the ball screw nut so as to become movable in only the axial direction such that a non-load-side shaft end of the ball screw shaft is housed in the through hole of the rotary shaft and such that a load-side end of the ball screw shaft protrudes from the load-side bracket; a rotation portion of the rotation sensor is coupled to a non-load-side portion of the rotary shaft protruding from the hole formed in the non-load-side bracket and is covered with a rotation sensor cover; and the control means of the servo motor is disposed on a part of the non-load-side bracket distant from the stator, and the control means and the rotation sensor cover are covered with a chassis to be fastened to the non-load-side bracket.

7. The cylinder servo motor according to claim 6, wherein the non-load-side end of the rotary shaft and the through hole are elongated to a position where the control means of the servo motor is disposed, and, in association with elongation of the non-load-side end and elongation of the through hole, the non-load-side shaft end of the ball screw shaft is elongated.

8. The cylinder servo motor according to claim 7, wherein a non-load-side of the through hole of the rotary shaft is opened, and a cover for covering the open side is removably provided; a through hole is formed in a portion of the chassis opposing the cover with reference to an axial direction of the rotary shaft; and the through hole formed in the chassis is provided with a removable cover.

9. The cylinder servo motor according to any one of claims 6 through 8, wherein the load-side shaft bearing is constituted of a ball bearing; an outer ring of the ball bearing is fixedly sandwiched between a shoulder section formed on an internal peripheral wall of the load-side bracket and an outer ring fastening nut to be screw-engaged with an internal peripheral wall of the load-side bracket; an inner ring of the ball bearing is fixedly sandwiched between a ball screw nut fastening shoulder section formed on the load-side shaft end of the rotary shaft of the servo motor and an inner ring fastening nut to be screw-engaged with the rotary shaft of the servo motor; and an inner diameter of the inner ring of the ball bearing is made greater than an outer diameter of the rotor of the servo motor.

10. The cylinder servo motor according to any one of claims 6 through 9, wherein the ball screw nut fastening shoulder is formed on the load-side shaft end of the rotary shaft; a fastening flange section is formed on the ball screw nut; a portion of the ball screw nut is fitted into the through hole formed in the load-side shaft end of the rotary shaft; the fastening flange section is brought into contact with and screw-engaged with the ball screw nut fastening shoulder section; the ball screw nut is fastened to the load-side shaft end of the rotary shaft, and an oil seal is held on the load-side bracket; and a lip section of the oil seal is brought into contact with an outer peripheral surface of the ball screw nut fastening flange.

11. The cylinder servo motor according to any one of claims 6 through 9, wherein a ball screw nut fastening shoulder is formed on a load-side shaft end of the rotary shaft; a fastening flange section is formed at a position closer to the center of the ball screw nut; a portion of the ball screw nut is fitted into a through hole section formed in the load-side shaft end of the rotary shaft; the fastening flange section is brought into contact with and screw-engaged with the ball screw nut fastening shoulder section; the ball screw nut is fastened to the load-side shaft end of the rotary shaft; an oil seal is held on the load-side bracket; and a lip section of the oil seal is brought into contact with an outer peripheral surface at the shaft end of the ball screw nut.

12. The cylinder servo motor according to any one of claims 6 through 11, wherein a detent groove is formed in an outer peripheral section of the ball screw shaft, in which the detent groove has substantially the same depth as that of a thread groove or a depth shallower than that of the thread groove and extends in an axial direction; the ball screw shaft has at least two balls to be inserted into the detent groove, and a spring for pressing the balls toward the detent groove at all times; and the balls are disposed such that at least one of the balls is situated in the detent groove at all times.

13. The cylinder servo motor according to any one of claims 6 through 11, wherein a detent groove is formed in an outer peripheral section of the ball screw shaft, the detent groove having substantially the same depth as that of a thread groove or a depth shallower than that of the thread groove and extends in an axial direction; and the ball screw shaft has at least one cylindrical roller which is to be inserted into the detent groove and is longer than a screw pitch of the ball screw shaft, and a spring for pressing the cylindrical ball toward the detent groove at all times.
